# EUROPEAN PATENT SPECIFICATION

(11) **EP 4 466 815 B1**
(45) Date of publication and mention of the grant of the patent: **25.02.2026**
(21) Application number: 22854305.4
(22) Date of filing: 23.12.2022
(51) Int. Cl.: H04L 1/1829, H04L 5/00, H04L 1/1607, H04L 1/1867

(54) **COMPRESSED SEQUENCE OF UPLINK CONTROL INFORMATION BITS**
KOMPRIMIERTE SEQUENZ VON UPLINK-STEUERINFORMATIONSBITS
SÉQUENCE COMPRESSÉE DE BITS D'INFORMATIONS DE COMMANDE DE LIAISON MONTANTE

(30) Priority: 17.01.2022 GR 20220100039
(43) Date of publication of application: 27.11.2024
(73) Proprietor: QUALCOMM INCORPORATED, San Diego, California 92121-1714 (US)
(72) Inventor: ELSHAFIE, Ahmed, San Diego, California 92121-1714 (US); MANOLAKOS, Alexandros, San Diego, California 92121-1714 (US); LY, Hung Dinh, San Diego, California 92121-1714 (US); HUANG, Yi, San Diego, California 92121-1714 (US)
(74) Representative: Jaeger, Michael David
(86) International application number: PCT/US2022/053961
(87) International publication number: WO 2023/136926

(56) References cited:
- WO-A1-2021/197122
- US-A1- 2010 315 961
- US-A1- 2023 016 851

## Description

### CROSS REFERENCE

The present Application for Patent claims the benefit of Greece Patent Application No. 20220100039 by ELSHAFIE et al., entitled "COMPRESSED SEQUENCE OF UPLINK CONTROL INFORMATION BITS," filed January 17, 2022, assigned to the assignee hereof.

### FIELD OF TECHNOLOGY

The following relates to wireless communications, including compressed sequence of uplink control information (UCI) bits.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some wireless communications systems, a base station may transmit one or more downlink data messages to a UE, where the UE is configured to provide feedback to the base station indicating whether the downlink data message was successfully received. The UE and the base station may support retransmissions of data to increase the likelihood that data is received successfully. Hybrid automatic repeat request (HARQ) feedback may include retransmission (e.g., automatic repeat request (ARQ)) based on a positive acknowledgement (ACK) or a negative acknowledgement (NACK) provided by the UE. In some examples, a device may support same-slot HARQ feedback, where the device may provide HARQ feedback in a specific slot for one or more data messages received in a previous symbol in the slot.

US 2010/315961 A1 provides an apparatus and method of transmitting and receiving a reception acknowledgment signal in a mobile communication system. The apparatus and method of receiving the reception acknowledgment signal includes respectively calculating a probability that the received reception acknowledgment signal is a reception success signal and a probability that the reception acknowledgment signal is a reception failure signal, by using an estimated packet error rate predicted based on a pre-set required packet error rate and determining whether the reception acknowledgment signal is the reception success signal or the reception failure signal. The apparatus and method of transmitting a reception acknowledgment signal includes determining transmission powers of a reception success signal and a reception failure signal in order to maximize a difference between a first complex signal and a second complex signal, the first complex signal being modulated for the reception success and the second complex signal being modulated for the reception failure, based on the average transmission power and a pre-set required packet error rate. The apparatus and method of transmitting reception acknowledgment signals transmits a single packet indicating reception successes or failures for a plurality of received data packets by using variable length coding based on a pre-set required packet error rate. According to the provided apparatus and method, non-uniformity of frequency between the reception success signal and the reception failure signal is considered to increase correct reception rate of the reception acknowledgment signal.

WO 2021/197122 A1 describes a HARQ-ACK feedback mode determining method, a HARQ-ACK feedback mode configuration method, and a device. The method includes: determining, according to a service type corresponding to a PDSCH, a HARQ-ACK feedback mode corresponding to the PDSCH; determining, according to a radio network temporary identifier RNTI of a PDSCH, a HARQ-ACK feedback mode corresponding to the PDSCH; or determining, according to downlink control information, DCI, for scheduling a PDSCH, a HARQ-ACK feedback mode corresponding to the PDSCH.

### SUMMARY

The described techniques relate to improved methods, systems, devices, and apparatuses that support compressed sequence of uplink control information (UCI) bits. Generally, the described techniques provide for accumulated sets of hybrid automatic repeat request (HARQ) acknowledgment (ACK) bits such that a number of bits transmitted during the uplink resource for transmitting accumulated feedback is minimized. For example, a user equipment (UE) may receive an indication of a plurality of accumulated feedback events (e.g., accumulated physical downlink shared channel (PDSCH) occasion events) that are each representative of different feedback combinations for reporting accumulated feedback for a set of scheduled downlink occasions. For example, each event may be associated with a unique combination of ACKs and negative acknowledgments (NACKs) associated with a number of PDSCH occasions. The UE may determine the accumulated feedback for the set of scheduled downlink occasions and may select, from the plurality of accumulated feedback events, a representative event based on the accumulated feedback. For example, the UE may determine an ACK or a NACK has occurred for each indicated PDSCH occasion and may identify the associated event based on the unique combination of ACKs and NACKs.

In such examples, the events may be ranked according to a likelihood of occurrence. For example, in some wireless communications, an ACK may be more likely to occur than a NACK (e.g., high traffic communication systems, ultra-reliable communications, low-latency communications) and in other wireless communications, a NACK may be more likely to occur (e.g., low traffic communication systems, high-latency communications) and a base station or the UE may be able to determine a likelihood that a combination of ACKs and NACKs will occur based on the ACK likelihood and a number of accumulated PDSCH occasions. Based on identifying the event, the UE may transmit an uplink control message indicative of the representative event including a set of bits indicative of the event and determined based on a Huffman coding scheme.

A method for wireless communication at a user equipment (UE) according to claim 1 is described.

An apparatus for wireless communication at a UE according to claim 14 is described.

A method for wireless communication at a base station according to claim 10 is described.

An apparatus for wireless communication at a base station according to claim 15 is described. The invention is defined by the appended claims.

### BRIEF DESCRIPTION OF THE DRAWINGS

FIG. 1 illustrates an example of a wireless communications system that supports compressed sequence of uplink control information (UCI) bits in accordance with aspects of the present disclosure.
FIG. 2 illustrates an example of a wireless communications system that supports compressed sequence of UCI bits in accordance with aspects of the present disclosure.
FIG. 3 illustrates an example of a process flow that supports compressed sequence of UCI bits in accordance with aspects of the present disclosure.
FIGs. 4 and 5 show block diagrams of devices that support compressed sequence of UCI bits in accordance with aspects of the present disclosure.
FIG. 6 shows a block diagram of a communications manager that supports compressed sequence of UCI bits in accordance with aspects of the present disclosure.
FIG. 7 shows a diagram of a system including a device that supports compressed sequence of UCI bits in accordance with aspects of the present disclosure.
FIGs. 8 and 9 show block diagrams of devices that support compressed sequence of UCI bits in accordance with aspects of the present disclosure.
FIG. 10 shows a block diagram of a communications manager that supports compressed sequence of UCI bits in accordance with aspects of the present disclosure.
FIG. 11 shows a diagram of a system including a device that supports compressed sequence of UCI bits in accordance with aspects of the present disclosure.
FIGs. 12 through 17 show flowcharts illustrating methods that support compressed sequence of UCI bits in accordance with aspects of the present disclosure.

### DETAILED DESCRIPTION

Some wireless communications systems may include efficient feedback schemes for an accumulated set or sets of feedback (e.g., hybrid automatic repeat request (HARQ) feedback) bits. For example, a base station may configure a user equipment (UE) with a semi-persistent scheduling (SPS)-based resource allocation for transmitting uplink messages including uplink control information (UCI). However, in some cases, the SPS resources may collide with other communications due to overlapping resource allocations (e.g., due to time division duplexing) in which case the UCI transmission may be deferred to a next available uplink slot. The control information may include a number of accumulated feedback bits for received physical downlink shared channel (PDSCH) messages. The accumulated bits may be bundles or may be formatted into a HARQ codebook. It may be beneficial to reduce a number of bits for transmitting the accumulated feedback to conserve communication resources.

Additionally or alternatively, a base station may configure a UE with one or more dynamic grants in which the UE may accumulate feedback from a number of downlink data messages (e.g., PDSCH messages) for uplink transmission on a same uplink resource (e.g., physical uplink control channel (PUCCH) resource). For example, there may be multiple HARQ-ACKs for multiple downlink data messages allocated in a same uplink slot, and as such the UE may bundle and transmit the UCI including the HARQ ACK bits in a same uplink slot. In some examples, downlink control information (DCI) may trigger multiple downlink data messages (e.g., PDSCHs) and the UE may generate HARQ-ACK for each PDSCH and bundle the feedback for transmission on the corresponding uplink slot. In some examples, a single DCI may configure and/or schedule multiple downlink data messages such that the corresponding feedback is transmitted on a same uplink resource (e.g., slot).

Aspects of the disclosure relate to efficient feedback schemes for accumulated sets of HARQ-ACK bits such that a number of bits transmitted during the uplink resource for transmitting accumulated feedback is minimized.

For example, in some wireless communications systems, base station link adaption, power control, and rate adaption may target a success rate for receiving SPS PDSCH. For example, SPS PDSCH transmitted using a first communication type (e.g., eMBB) may be associated with a first success rate (e.g., a 90% success rate) while SPS PDSCH transmitted using a second communication type (e.g., URLLC) may be associated with a second success rate (e.g., a 99.999% success rate). In such wireless communications systems, the UE or the base station may generate a number of HARQ-ACK events each with a different likelihood of occurring. For example, if x number of PDSCH are received from a base station and the UE is to transmit feedback for these x PDSCH, then the event will include a combination of ACKs or NACKs totaling x. That is, each event includes a series of ACKs and/or NACKs where each unique combination of ACKs and NACKs is associated with a different probability of occurrence based on the wireless communications utilized by the base station and the UE.

Each possible combination of ACKs and NACKs may be considered an event and each event may be ranked according to the likelihood of occurrence. The base station and/or the UE may apply Huffman coding based on the probabilities of the events. In some examples, the representation between events and probability may be configured and signaled by the base station or, in some other examples, the base station may signal a probability of an ACK occurring and the UE may calculate the likelihood of events and may configure the representation between events and probability.

The higher the probability of an event, the less resources (or UCI stages) may be used to transmit the associated feedback. According to the Huffman coding, a binary tree may be generated from left to right selecting the two least probable events and aggregating them to form another equivalent event having a probability that equals the sum of the two events. The process may be repeated until there is a single event. The tree may be interpreted, from right to left, assigning different bits to different branches according to the Huffman coding. For example, in a four event situation, the most likely event (E1) may be represented by 0 and the remaining events (E2, E3, and E4) may first be represented by a multi-bit feedback starting with 1. Out of E2, E3, and E4, if E2 is most likely then it may be represented by 10 and E3 and E4 may be represented by multi-bit feedback starting with 11. Out of E3 and E4, if E3 is most likely then it may be represented by 110 and E4 may be represented by 111. That is, the most probable outcome of the event may be represented by feedback having the fewest bits, the second most probable outcome of the event may be represented by feedback having the next fewest bits and so on until the least probable outcome of the event which may be represented by feedback having the most bits. Thus, the accumulated feedback may be minimized thereby conserving resources.

Aspects of the disclosure are initially described in the context of wireless communications systems. Aspects of the disclosure are then described in the context of a resource configuration and a process flow. Aspects of the disclosure are further illustrated by and described with reference to apparatus diagrams, system diagrams, and flowcharts that relate to compressed sequence of UCI bits.

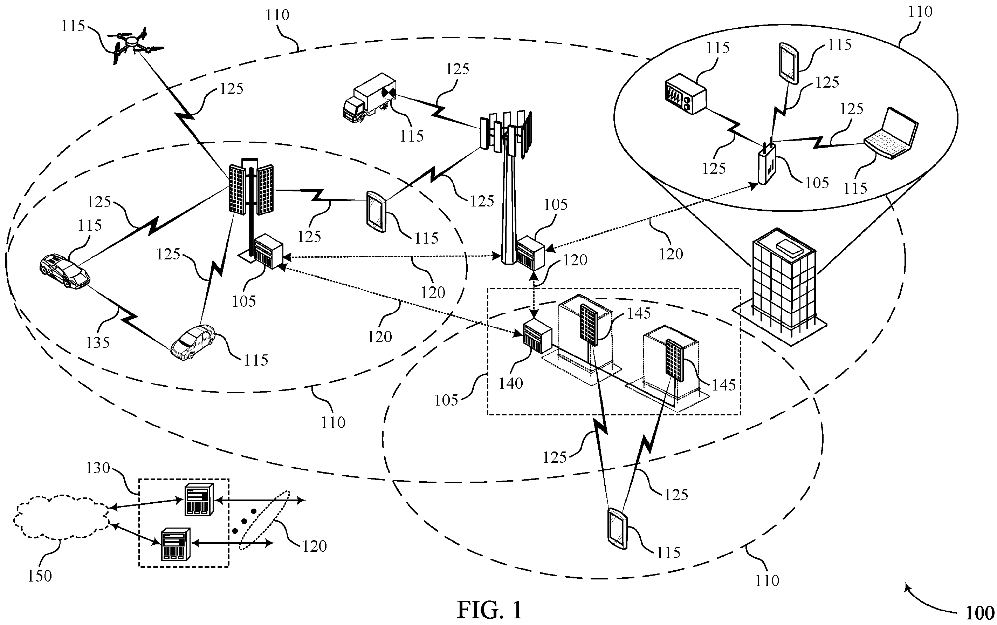

**FIG.** 1 illustrates an example of a wireless communications system 100 that supports compressed sequence of UCI bits in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

In some examples, one or more components of the wireless communications system 100 may operate as or be referred to as a network node. As used herein, a network node may refer to any UE 115, base station 105, entity of a core network 130, apparatus, device, or computing system configured to perform any techniques described herein. For example, a network node may be a UE 115. As another example, a network node may be a base station 105. As another example, a first network node may be configured to communicate with a second network node or a third network node. In one aspect of this example, the first network node may be a UE 115, the second network node may be a base station 105, and the third network node may be a UE 115. In another aspect of this example, the first network node may be a UE 115, the second network node may be a base station 105, and the third network node may be a base station 105. In yet other aspects of this example, the first, second, and third network nodes may be different. Similarly, reference to a UE 115, a base station 105, an apparatus, a device, or a computing system may include disclosure of the UE 115, base station 105, apparatus, device, or computing system being a network node. For example, disclosure that a UE 115 is configured to receive information from a base station 105 also discloses that a first network node is configured to receive information from a second network node. In this example, consistent with this disclosure, the first network node may refer to a first UE 115, a first base station 105, a first apparatus, a first device, or a first computing system configured to receive the information; and the second network node may refer to a second UE 115, a second base station 105, a second apparatus, a second device, or a second computing system

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ =* 1/(*Δfₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may be configured to support ultra-reliable communications or low-latency communications, or various combinations thereof. For example, the wireless communications system 100 may be configured to support ultra-reliable low-latency communications (URLLC). The UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using vehicle-to-everything (V2X) communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

The wireless communications system 100 may support efficient feedback schemes for an accumulated set or sets of feedback (e.g., HARQ feedback) bits. For example, a base station 105 may configure a UE 115 with an semi-persistent scheduling SPS-based resource allocation for transmitting uplink messages including UCI. In some cases, the SPS resources may collide with other communications due to overlapping resource allocations (e.g., due to time division duplexing) in which case the UCI transmission may be deferred to a next available uplink slot. The control information may include a number of accumulated feedback bits for received PDSCH messages. The accumulated bits may be bundles or may be formatted into a HARQ codebook. It may be beneficial to reduce a number of bits for transmitting the accumulated feedback to conserve communication resources.

Additionally or alternatively, the base station 105 may configure the UE 115 with one or more dynamic grants in which the UE 115 may accumulate feedback from a number of downlink data messages (e.g., PDSCH messages) for uplink transmission on a same uplink resource (e.g., PUCCH resource). For example, there may be multiple HARQ-ACKs for multiple downlink data messages allocated in a same uplink slot, and as such the UE 115 may bundle and transmit the UCI including the HARQ ACK bits in a same uplink slot. In some examples, DCI may trigger multiple downlink data messages (e.g., PDSCHs) and the UE 115 may generate HARQ-ACK for each PDSCH and bundle the feedback for transmission on the corresponding uplink slot.

For example, the UE 115 may receive an indication of a plurality of accumulated feedback events (e.g., accumulated PDSCH occasion events) that are each representative of different feedback combinations for reporting accumulated feedback for a set of scheduled downlink occasions. For example, each event may be associated with a unique combination of ACKs and NACKs associated with a number of PDSCH occasions. The UE 115 may determine the accumulated feedback for the set of scheduled downlink occasions and may select, from the plurality of accumulated feedback events, a representative event based on the accumulated feedback. For example, the UE 115 may determine an ACK or a NACK has occurred for each indicated PDSCH occasion and may identify the associated event based on the unique combination of ACKs and NACKs.

In such examples, the events may be ranked according to a likelihood of occurrence. For example, in some wireless communications, an ACK may be more likely to occur than a NACK (e.g., high traffic communication systems, ultra-reliable communications, low-latency communications) and in other wireless communications, a NACK may be more likely to occur (e.g., low traffic communication systems, high-latency communications) and the base station 105 or the UE 115 may be able to determine a likelihood that a combination of ACKs and NACKs will occur based on the ACK likelihood and a number of accumulated PDSCH occasions. Based on identifying the event, the UE 115 may transmit an uplink control message indicative of the representative event. That is, the uplink control message may include a set of bits indicative of the event and determined based on a Huffman coding scheme.

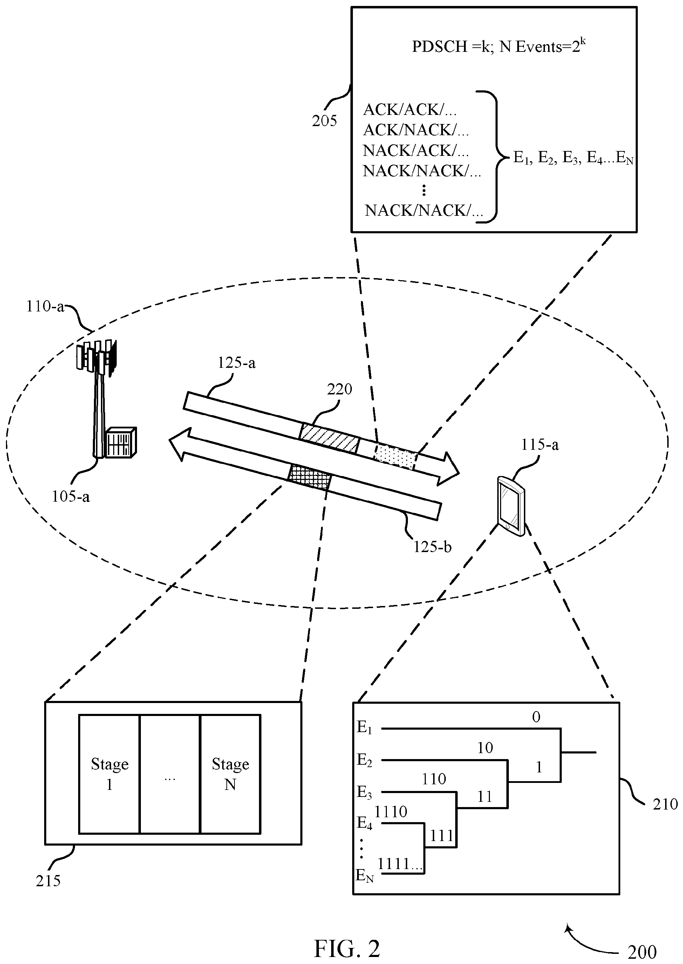

**FIG.** 2 illustrates an example of a wireless communications system 200 that supports compressed sequence of UCI bits in accordance with aspects of the present disclosure. In some examples, wireless communications system 200 may implement aspects of wireless communications system 100. Wireless communications system 200 may include a base station 105-a and a UE 115-a operating in a coverage area 110-a which may be examples of the corresponding devices or parts as described with reference to FIG. 1.

In some examples, the wireless communications system 200 may support various communication techniques, for example, such as link adaption, power control, and rate adaption, each of which may affect a success rate associated with scheduled downlink occasions 220 (e.g., scheduled by SPS, dynamic grant, or configured grant). For example, eMBB communications may be associated with a success rate of 90% in some examples (e.g., for SPS PDSCH occasions) and URLLC communications may be associate with a success rate of 99.999%.

In some examples, SPS may be affected by accumulated HARQ-ACK . That is, when a configured uplink feedback occasion collides with one or more other scheduled communications, the UE 115-a may wait to transmit feedback (e.g., HARQ ACK/NACK feedback) until a next available uplink slot which may be after a second configured uplink feedback occasion and thus feedback for more than one scheduled downlink occasion 220 may be accumulated until the next available uplink slot. Such collisions may occur due to TDD with one or more other grants or portions of grants.

SPS may include a number of scheduled downlink occasions 220 (e.g., for PDSCH transmissions) separated in time by a duration, p. (e.g., a duration between one SPS PDSCH occasion and another SPS PDSCH occasion. The number of scheduled downlink occasions 220 may be initiated by an activation DCI. For example, after receiving the activation DCI, the UE 115-a may expect to receive a first downlink occasion 220, via downlink 125-a, by the time a duration, k0 has elapsed and may receive one or more other occasions separated in time by duration, p. In some examples, the time between the PDSCH occasion and a scheduled uplink occasion for transmitting feedback for the PDSCH occasion may be a duration, k1 which may be explicitly indicated by the activation DCI. In some examples, the schedule uplink occasion may collide with one or more other message and the UE 115-a may wait to transmit feedback until a next available uplink occasion.

In some other example scheduling mechanisms, dynamic grants may include an allocation of multiple PDSCH occasions to a same uplink slot and as such, the UE 115-a may bundle and transmit feedback (e.g., multiple HARQ ACK feedback bits or the UCI bits) during a same uplink feedback occasion. The dynamic grant may include a DCI that triggers multiple downlink occasions 220 (e.g., for transmitting PDSCH) and where the UE 115-a may generate HARQ feedback for each occasion and may bundle and transmit the generated HARQ feedback on the dedicated uplink slots.

That is, feedback associated for a number of scheduled downlink occasions 220 (e.g., for transmitting PDSCH) may be accumulated and transmitting during a same uplink feedback occasion (e.g., PUCCH occasion). However, methods for efficient feedback schemes for accumulated set of HARQ-ACK bits may conserve communication resources.

In some examples, a scheduled downlink occasion 220 may be skipped or may not include data (e.g., due to low traffic volume) and the base station 105-a may refrain from transmitting during one or more downlink occasions 220. As such, when the UE 115-a receives the skipped or empty PDSCH, the UE 115-a may transmit a NACK or may transmit a dummy NACK associated with the skipped or empty occasion 220.

In some examples, traffic volume may affect the success rate associated with scheduled downlink occasions 220. For example, traffic volume may be sparse or may be sporadic (e.g., one transmission sent in every ten occasions). In such cases, the probably of a NACK or the probability of a dummy NACK may be relatively high because even though the probability of a NACK rather than an ACK is small, the presence of many empty downlink occasions 220 may increase the likelihood of a NACK. Conversely, in high traffic situations, an empty downlink occasion 220 may be unlikely and thus an ACK may be more likely than a NACK.

Thus, the probability of an ACK or a NACK may be a function of the bit error rate and traffic parameters, where each set of accumulated feedback bits may be associated with a combination of ACKs and NACKs corresponding to the set of downlink occasions 220 and each combination may be associated with a probability of occurring based on the ACK probability.

For example, the UE 115-a may accumulate bits for a number of downlink occasions 220, k and thus since each downlink occasion 220 may be associated with an ACK or a NACK, the number of possible events (e.g., unique combinations of ACK/NACK) may be 2^{k} events. The base station 105-a may transmit an indication of a plurality of accumulated feedback events 205 to the UE 115-a where the indication may include a number of events (e.g., combinations of ACKs and NACKs) that are each representative of different feedback combinations for reporting accumulated feedback for the scheduled downlink occasions 220. In some examples, the base station 105-a may determine a likelihood of each event and may transmit an indication to the UE 115-a including the probability of each event. In some examples, the base station 105-a may transmit a probability of an ACK (e.g., and implicitly indicate prob(NACK)=1-prob(ACK)) and the UE 115-a may calculate a probability of each event. In some examples, the base station 105-a may configure the UE 115-a with a number of tables each ordered according to a most likely outcome and the base station 105-a may indicate to the UE 115-a which table to use for accumulated feedback. The events may be ordered by the base station 105-a or the UE 115-a based on the associated probability, where a first event (e.g., E1) is most likely to occur and a 2^{kth} event is least likely to occur. That is, the ranking of events may vary with channel conditions, configured layer conditions, and/or network conditions. The UE 115-a may receive the downlink occasions 220 and may determine determining the accumulated feedback for the scheduled downlink occasions 220 and may select, from the accumulated feedback events, a representative event based on the accumulated feedback.

The base station 105-a and/or the UE 115-a may apply Huffman coding 210 based on the probabilities of the events. For example, the higher the probability of an event, the fewer resources (or UCI stages) the UE 115-a may use to transmit the feedback associated with an event. According to the Huffman coding, a binary tree may be generated from left to right selecting the two least probable events and aggregating them to form another equivalent event having a probability that equals the sum of the two events. The process may be repeated until there is a single event. The tree may be interpreted, from right to left, assigning different bits to different branches according to the Huffman coding. For example, in a N event situation, the most likely event (E1) may be represented by 0 and the remaining events (E2, E3, and E4) may first be represented by a multi-bit feedback starting with 1. Out of E2, E3, and E4, if E2 is most likely then it may be represented by 10 and E3 and E4 may be represented by multi-bit feedback starting with 11. Out of E3 and E4, if E3 is most likely then it may be represented by 110 and E4 may be represented by 1110 and so on until E_{N} which may be represented by multi-bit feedback starting with 1111. That is, the most probable outcome of the event may be represented by feedback having the fewest bits, the second most probable outcome of the event may be represented by feedback having the next fewest bits and so on until the least probable outcome of the event which may be represented by feedback having the most bits. Thus, the accumulated feedback may be minimized thereby conserving resources.

The UE 115-a may transmit the accumulated event feedback 215 via UCI transmitted via uplink 125-b over multiple stages. For example, an uplink occasion (e.g., PUCCH occasion having one OFDM symbol with one RB) may be partitioned into a number of stages (e.g., bit fields) equal to N-1 and the UE 115- may transmit a first feedback bit in a corresponding stage. If the event is associated with more than one bit, the UE 115-a may transmit a second bit in a corresponding stage. Since events that are associated with a higher probability of occurrence are indicated by a fewer number of bits it is likely that a subset of stages of the uplink feedback resources may be used. In some examples, stages may be frequency duplexed such that a first stage may overlap with a second stage in time.

In some examples, later stages (e.g., a last stage, a second to last stage, a third to last stage) may be canceled (e.g., removed or discarded) by the UE 115-a via L1, L2, or L3 signaling (e.g., including an indication) from the base station 105-a or another UE or may be canceled (e.g., removed or discarded) by the base station 105-a via L1, L2, or L3 signaling (e.g., including an indication) from the UE 115-a or another UE. Later stages may be canceled or removed because these stages may correspond to low probability bits or events (e.g., E_{N}).

That is, in most cases, a first stage may be used and the remaining stages will be conserved and may be available for other UE feedback transmissions thus, conserving resources, conserving power, and reducing a likelihood of collision.

The base station 105-a may transmit signaling (e.g., RRC or MAC-CE) including a resource mapping for the uplink feedback occasion. For example, the base station 105-a may allocate an uplink feedback resource to the UE 115-a including a number of symbols, L (e.g., 1 symbol) and the UE 115-a may partition can split the L symbols into L different time and frequency resources in a preconfigured manner. For example, if the base station 105-a allocates the UE 115-a with three symbols and N-1 is three bits, each symbol may be assigned a bit. In some examples, the base station 105-a may allocate the UE 115-a with a number of symbols L that is greater than N-1 and some resources may go unused even if the most unlikely event occurs (e.g., using N-1 symbols).

In some examples, the base station 105-a may transmit a first resource mapping for a feedback resource occasion to the UE 115-a and may transmit a second resource mapping for the same feedback resource occasion to a second UE. That is, the base station 105-a may assign two different UEs the same resources and may indicate a first symbol or stage for a first UE to transmit the most probable bit and may indicate a second symbol or stage for a second UE to transmit the most probable bit such that collision of uplink feedback transmission may be minimized. In some examples, the base station 105-a may assign each UE (e.g., including UE 115-a) a different ordering of the resources for transmitting feedback bits such that feedback form one UE is not likely to collide with feedback from another UE on the same resources.

In some examples, the base station 105-a may assign the UE 115-a a number of resources (e.g., k orthogonal resources, 14 symbols) such that if the UE 115-a has N-1 feedback bits, the UE 115-a may use the first N-1 symbols. In some examples, the UE 115-a may be configured with a polynomial or equation which indicates a mapping of which resources of the number of resources are to be used to transmit the number of accumulated bits and which resources of the number of resources to use for other UCI bits. In some examples, this may include TDM. For example, the base station 105-a may configure a PUCCH resource with 14 symbols and each UE may use a different starting symbol and length for its own event feedback transmission such that collision is minimized.

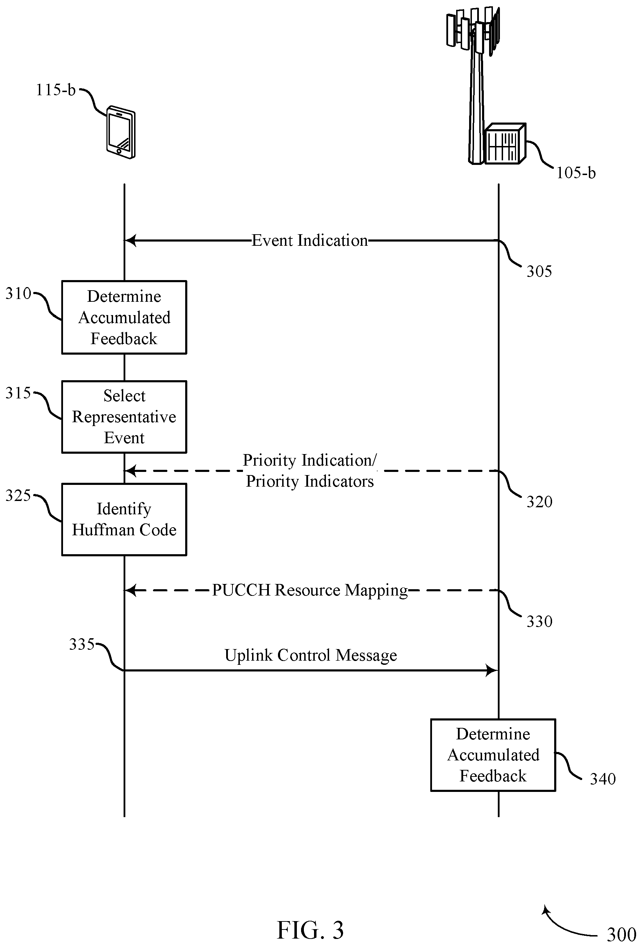

**FIG. 3** illustrates an example of a process flow 300 that supports compressed sequence of UCI bits in accordance with aspects of the present disclosure. The process flow 300 may implement or be implemented by aspects of wireless communications system 100 or 200. For example, the process flow 300 may illustrate operations between a UE 115-b and a base station 105-b, which may be examples of a UE 115 and a base station 105, as described with reference to FIG. 1. In the following description of the process flow 300, the operations between the UE 115-b and the base station 105-b may be transmitted in a different order than the example order shown, or the operations performed by the UE 115-b and the base station 105-b may be performed in different orders or at different times. Some operations may also be omitted from the process flow 300, and other operations may be added to the process flow 300.

At 305, the base station 105-b transmits an event indication. In particular, the base station 105-b transmits an indication of a plurality of accumulated feedback events that are each representative of different feedback combinations for reporting accumulated feedback for a set of scheduled downlink occasions (e.g., PDSCH occasions).

At 310, the UE 115-b determines the accumulated feedback for the set of scheduled downlink occasions. For example, the UE 115-b may determine that each scheduled downlink occasion is associated with an ACK or a NACK and at 315, selects an event corresponding to the combination of ACKs and NACKs determined at 310. In some examples, the representative event may be associated with a probability of occurrence. That is, based on a probability of an ACK or NACK occurring in the wireless communications, the combination of ACKs and NACKs may also be associated with a probability of occurrence.

At 320, the UE 115-b may receive a priority indication that includes a probability associated with the occurrence of an ACK associated with each downlink data occasion. In some other examples, the UE 115-b may receive a relative priority indicator for each possible event. In some examples, the priority indication of the ACK or the priority indicators of the events, or both are received via at least one of radio resource control (RRC) signaling or medium access control (MAC) control element (CE) signaling.

At 325, the UE 115-b determines a Huffman code for the representative event. For example, according to the Huffman coding, the UE 115-b may generate a binary tree and may select the two least probable events and aggregate them to form another equivalent event having a probability that equals the sum of the two events. The process may be repeated until there is a single event. The tree may be interpreted, from right to left, assigning different bits to different branches according to the Huffman coding. For example, in a four event situation, the most likely event (E1) may be represented by 0 and the remaining events (E2, E3, and E4) may first be represented by a multi-bit feedback starting with 1. Out of E2, E3, and E4, if E2 is most likely then it may be represented by 10 and E3 and E4 may be represented by multi-bit feedback starting with 11. Out of E3 and E4, if E3 is most likely then it may be represented by 110 and E4 may be represented by 111. That is, the most probable outcome of the event may be represented by feedback having the fewest bits, the second most probable outcome of the event may be represented by feedback having the next fewest bits and so on until the least probable outcome of the event which may be represented by feedback having the most bits. Thus, the accumulated feedback determined by the UE 115-b may be minimized thereby conserving resources.

At 330, the UE 115-b may receive a PUCCH resource mapping for transmitting the accumulated feedback. For example, the PUCCH resource may be divided into a number of stages for transmitting a bit of the accumulated feedback. The number of stages of the PUCCH occasion may correspond to a maximum number of bits determined by the Huffman coding which may also correspond to the number of downlink occasions for which feedback is accumulated. The PUCCH mapping may indicate a stage in which the UE 115-b is to transmit the first bit of the accumulated feedback. As such, because the most probable event is associated with the fewest number of bits, it is likely that the UE 115-b may use the stage allocated for the first bit. The PUCCH mapping may further indicate a stage for each subsequent bit. In some examples, the base station 105-b may transmit a PUCCH resource mapping to another UE that is complimentary to the PUCCH resource mapping transmitted to the UE 115-b. That is, a stage assigned to another UE for transmitting the first bit of accumulated feedback may be different that the stage assigned to the UE 115-b for transmitting the first bit of feedback such that the potential for colliding feedback is minimized.

In some examples, later stages (e.g., a last stage, a second to last stage, a third to last stage) may be canceled (e.g., removed or discarded) by the UE 115-b via L1, L2, or L3 signaling (e.g., including an indication) from the base station 105-b or another UE or may be canceled (e.g., removed or discarded) by the base station 105-b via L1, L2, or L3 signaling (e.g., including an indication) from the UE 115-b or another UE. Later stages may be canceled or removed because these stages may correspond to low probability bits or events.

At 335, the UE 115-a may transmit the accumulated feedback in one or more stages of the assigned PUCCH resource, and in some cases, according to the PUCCH mapping. At 340, the base station 105-b determines the accumulated feedback and may determine to retransmit one or more data messages based on the received uplink control message.

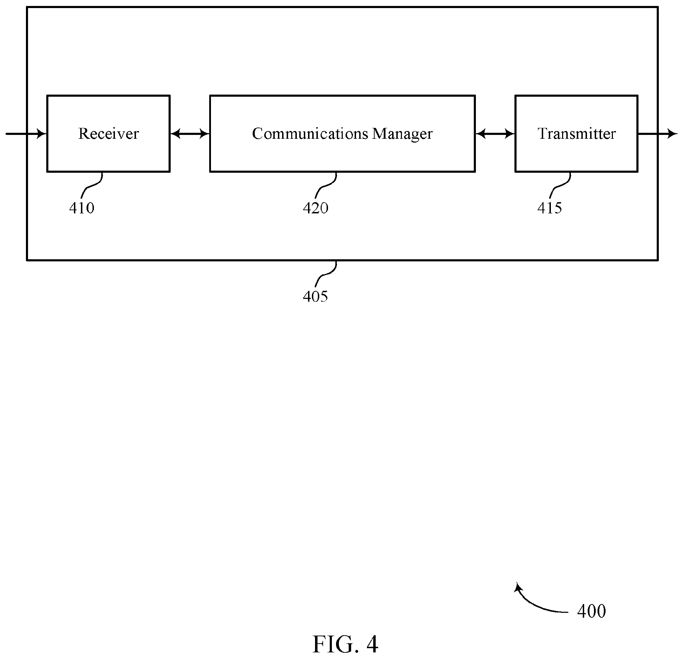

**FIG. 4** shows a block diagram 400 of a device 405 that supports compressed sequence of UCI bits in accordance with aspects of the present disclosure. The device 405 is an example of aspects of a UE 115 as described herein. The device 405 may include a receiver 410, a transmitter 415, and a communications manager 420. The device 405 also includes a processor. Each of these components may be in communication with one another (e.g., via one or more buses).

The receiver 410 may provide a means for receiving information such as packets, user data, control information, or any combination thereof associated with various information channels (e.g., control channels, data channels, information channels related to compressed sequence of UCI bits). Information may be passed on to other components of the device 405. The receiver 410 may utilize a single antenna or a set of multiple antennas.

The transmitter 415 may provide a means for transmitting signals generated by other components of the device 405. For example, the transmitter 415 may transmit information such as packets, user data, control information, or any combination thereof associated with various information channels (e.g., control channels, data channels, information channels related to compressed sequence of UCI bits). In some examples, the transmitter 415 may be co-located with a receiver 410 in a transceiver. The transmitter 415 may utilize a single antenna or a set of multiple antennas.

The communications manager 420, the receiver 410, the transmitter 415, or various combinations thereof or various components thereof may be examples of means for performing various aspects of compressed sequence of UCI bits as described herein. For example, the communications manager 420, the receiver 410, the transmitter 415, or various combinations or components thereof may support a method for performing one or more of the functions described herein.

In some examples, the communications manager 420, the receiver 410, the transmitter 415, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. Additionally, a processor and memory coupled with the processor are configured to perform one or more of the functions described herein (e.g., by executing, by the processor, instructions stored in the memory).

Additionally or alternatively, in some examples, the communications manager 420, the receiver 410, the transmitter 415, or various combinations or components thereof may be implemented in code (e.g., as communications management software or firmware) executed by a processor. If implemented in code executed by a processor, the functions of the communications manager 420, the receiver 410, the transmitter 415, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 420 may be configured to perform various operations (e.g., receiving, monitoring, transmitting) using or otherwise in cooperation with the receiver 410, the transmitter 415, or both. For example, the communications manager 420 may receive information from the receiver 410, send information to the transmitter 415, or be integrated in combination with the receiver 410, the transmitter 415, or both to receive information, transmit information, or perform various other operations as described herein.

The communications manager 420 may support wireless communication at a UE in accordance with examples as disclosed herein. For example, the communications manager 420 may be configured as or otherwise support a means for receiving an indication of a set of multiple accumulated feedback events that are each representative of different feedback combinations for reporting accumulated feedback for a set of scheduled downlink occasions. The communications manager 420 may be configured as or otherwise support a means for determining the accumulated feedback for the set of scheduled downlink occasions. The communications manager 420 may be configured as or otherwise support a means for selecting, from the set of multiple accumulated feedback events, a representative event based on the accumulated feedback. The communications manager 420 may be configured as or otherwise support a means for transmitting an uplink control message indicative of the representative event.

By including or configuring the communications manager 420 in accordance with examples as described herein, the device 405 (e.g., a processor controlling or otherwise coupled to the receiver 410, the transmitter 415, the communications manager 420, or a combination thereof) may support techniques for more efficient utilization of communication resources, among other examples.

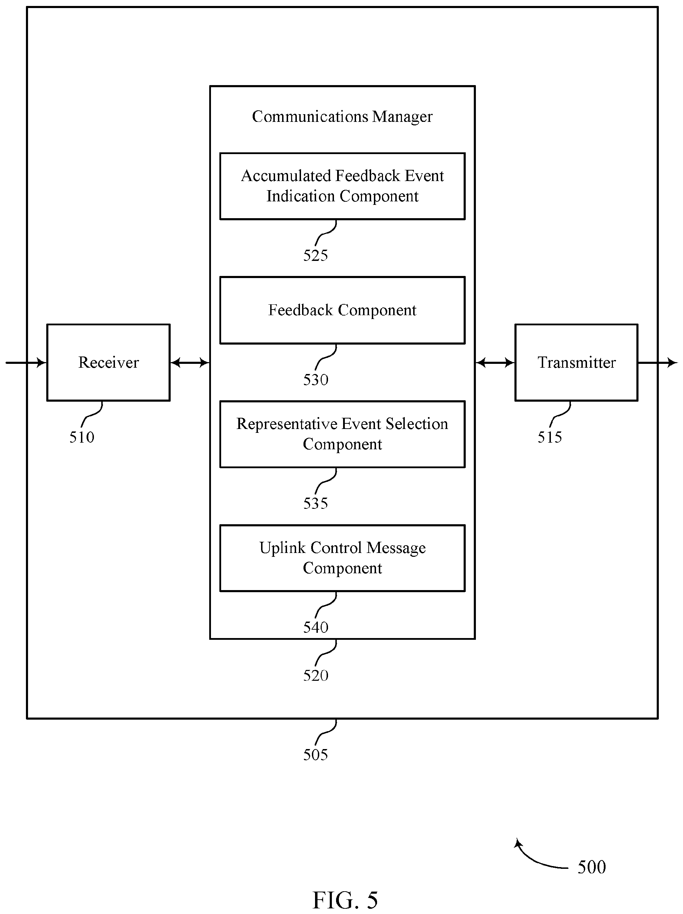

**FIG.** 5 shows a block diagram 500 of a device 505 that supports compressed sequence of UCI bits in accordance with aspects of the present disclosure. The device 505 is an example of aspects of a device 405 or a UE 115 as described herein. The device 505 may include a receiver 510, a transmitter 515, and a communications manager 520. The device 505 also includes a processor. Each of these components may be in communication with one another (e.g., via one or more buses).

The receiver 510 may provide a means for receiving information such as packets, user data, control information, or any combination thereof associated with various information channels (e.g., control channels, data channels, information channels related to compressed sequence of UCI bits). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to compressed sequence of UCI bits). In some examples, the transmitter 515 may be co-located with a receiver 510 in a transceiver. The transmitter 515 may utilize a single antenna or a set of multiple antennas.

The device 505, or various components thereof, may be an example of means for performing various aspects of compressed sequence of UCI bits as described herein. For example, the communications manager 520 may include an accumulated feedback event indication component 525, a feedback component 530, a representative event selection component 535, an uplink control message component 540, or any combination thereof. The communications manager 520 may be an example of aspects of a communications manager 420 as described herein. In some examples, the communications manager 520, or various components thereof, may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communication at a UE in accordance with examples as disclosed herein. The accumulated feedback event indication component 525 may be configured as or otherwise support a means for receiving an indication of a set of multiple accumulated feedback events that are each representative of different feedback combinations for reporting accumulated feedback for a set of scheduled downlink occasions. The feedback component 530 may be configured as or otherwise support a means for determining the accumulated feedback for the set of scheduled downlink occasions. The representative event selection component 535 may be configured as or otherwise support a means for selecting, from the set of multiple accumulated feedback events, a representative event based on the accumulated feedback. The uplink control message component 540 may be configured as or otherwise support a means for transmitting an uplink control message indicative of the representative event.

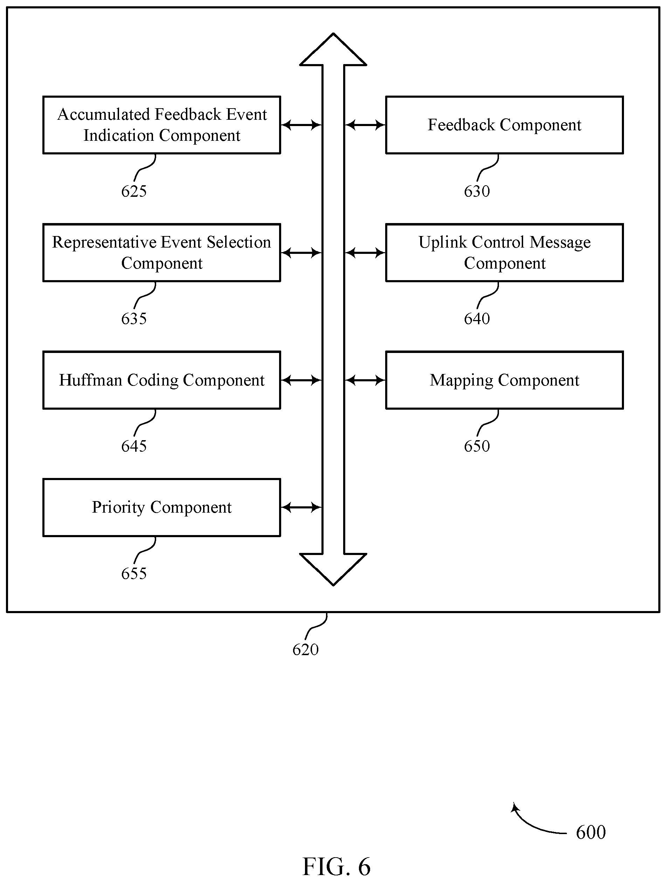

**FIG. 6** shows a block diagram 600 of a communications manager 620 that supports compressed sequence of UCI bits in accordance with aspects of the present disclosure. The communications manager 620 may be an example of aspects of a communications manager 420, a communications manager 520, or both, as described herein. The communications manager 620, or various components thereof, may be an example of means for performing various aspects of compressed sequence of UCI bits as described herein. For example, the communications manager 620 may include an accumulated feedback event indication component 625, a feedback component 630, a representative event selection component 635, an uplink control message component 640, a Huffman coding component 645, a mapping component 650, a priority component 655, or any combination thereof. Each of these components may communicate, directly or indirectly, with one another (e.g., via one or more buses).

The communications manager 620 may support wireless communication at a UE in accordance with examples as disclosed herein. The accumulated feedback event indication component 625 may be configured as or otherwise support a means for receiving an indication of a set of multiple accumulated feedback events that are each representative of different feedback combinations for reporting accumulated feedback for a set of scheduled downlink occasions. The feedback component 630 may be configured as or otherwise support a means for determining the accumulated feedback for the set of scheduled downlink occasions. The representative event selection component 635 may be configured as or otherwise support a means for selecting, from the set of multiple accumulated feedback events, a representative event based on the accumulated feedback. The uplink control message component 640 may be configured as or otherwise support a means for transmitting an uplink control message indicative of the representative event.

In some examples, to support transmitting the uplink control message, the Huffman coding component 645 may be configured as or otherwise support a means for identifying a Huffman code for the representative event. In some examples, to support transmitting the uplink control message, the uplink control message component 640 may be configured as or otherwise support a means for transmitting the Huffman code via one or more stages of the uplink control message.

In some examples, to support identifying the Huffman code, the priority component 655 may be configured as or otherwise support a means for determining a relative priority for the representative event with respect to others of the set of multiple accumulated feedback events. In some examples, to support identifying the Huffman code, the Huffman coding component 645 may be configured as or otherwise support a means for identifying the Huffman code based on the relative priority for the representative event.

In some examples, to support determining the relative priority for the representative event, the priority component 655 may be configured as or otherwise support a means for receiving a priority indication of the representative event via at least one of RRC signaling or medium access control (MAC) control element (CE) signaling, where the relative priority is based on the priority indication.

In some examples, to support determining the relative priority for the representative event, the priority component 655 may be configured as or otherwise support a means for receiving one or more acknowledgment probability indicators associated with the set of scheduled downlink occasions. In some examples, to support determining the relative priority for the representative event, the priority component 655 may be configured as or otherwise support a means for determining the relative priority for the representative event based on the one or more acknowledgment probability indicators.

In some examples, to support transmitting the Huffman code via the one or more stages of the uplink control message, the uplink control message component 640 may be configured as or otherwise support a means for transmitting individual bits of the Huffman code on a per stage basis.

In some examples, the one or more stages of the uplink control message is a fixed number of stages. In some examples, the Huffman code has a number of bits that is equal to or less than the fixed number of stages.

In some examples, to support transmitting the Huffman code via the one or more stages of the uplink control message, the uplink control message component 640 may be configured as or otherwise support a means for transmitting individual bits of the Huffman code in different uplink control message resources.

In some examples, the different uplink control message resources are different time or frequency resources of a physical uplink control channel.

In some examples, to support transmitting the individual bits of the Huffman code in the different uplink control message resources, the uplink control message component 640 may be configured as or otherwise support a means for using different transmission power levels for transmission over the different uplink control message resources such that transmission of higher priority events of the set of multiple accumulated feedback events is associated with higher transmission power levels.

In some examples, the mapping component 650 may be configured as or otherwise support a means for receiving a mapping of physical uplink control channel resources to the set of multiple accumulated feedback events.

In some examples, to support transmitting the uplink control message, the mapping component 650 may be configured as or otherwise support a means for identifying, from the mapping, a selected physical uplink control channel resource that corresponds to the representative event. In some examples, to support transmitting the uplink control message, the uplink control message component 640 may be configured as or otherwise support a means for transmitting a bit over the selected physical uplink control channel resource in order to indicate that the representative event occurred.

In some examples, the mapping is different for different UEs.

In some examples, the physical uplink control channel resources are differentiated by time, frequency, or both.

In some examples, to support receiving the mapping, the mapping component 650 may be configured as or otherwise support a means for receiving the mapping via at least one of RRC signaling or medium access control (MAC) control element (CE) signaling.

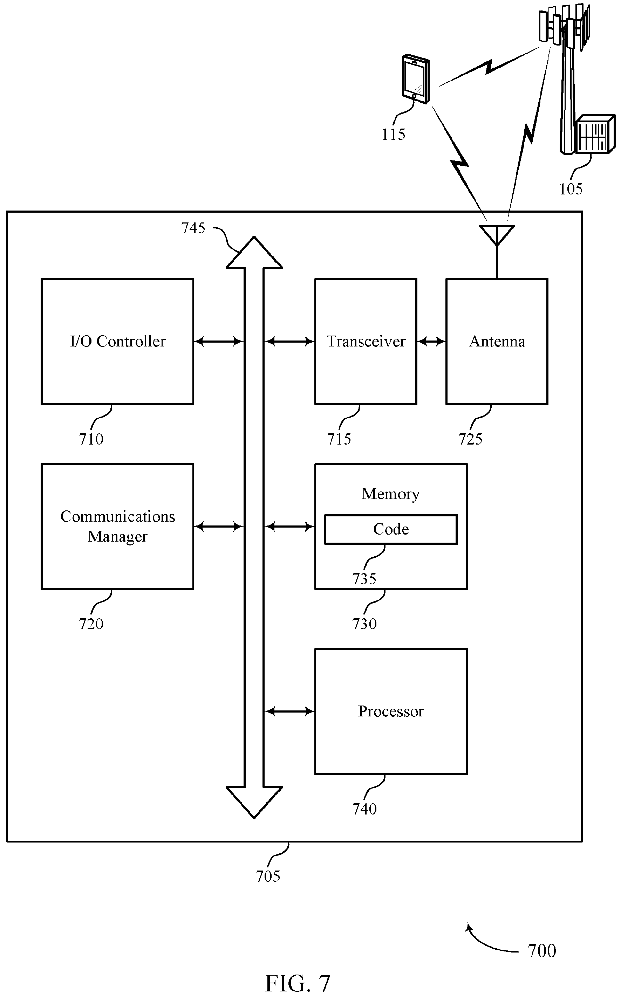

**FIG. 7** shows a diagram of a system 700 including a device 705 that supports compressed sequence of UCI bits in accordance with aspects of the present disclosure. The device 705 is or includes the components of a device 405, a device 505, or a UE 115 as described herein. The device 705 may communicate wirelessly with one or more base stations 105, UEs 115, or any combination thereof. The device 705 includes components for bi-directional voice and data communications including components for transmitting and receiving communications, such as a communications manager 720, an input/output (I/O) controller 710, a transceiver 715, an antenna 725, a memory 730, code 735, and a processor 740. These components may be in electronic communication or otherwise coupled (e.g., operatively, communicatively, functionally, electronically, electrically) via one or more buses (e.g., a bus 745).

The I/O controller 710 may manage input and output signals for the device 705. The I/O controller 710 may also manage peripherals not integrated into the device 705. In some cases, the I/O controller 710 may represent a physical connection or port to an external peripheral. In some cases, the I/O controller 710 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 710 may represent or interact with a modem, a keyboard, a mouse, a touchscreen, or a similar device. In some cases, the I/O controller 710 may be implemented as part of a processor, such as the processor 740. In some cases, a user may interact with the device 705 via the I/O controller 710 or via hardware components controlled by the I/O controller 710.

In some cases, the device 705 may include a single antenna 725. However, in some other cases, the device 705 may have more than one antenna 725, which may be capable of concurrently transmitting or receiving multiple wireless transmissions. The transceiver 715 may communicate bi-directionally, via the one or more antennas 725, wired, or wireless links as described herein. For example, the transceiver 715 may represent a wireless transceiver and may communicate bi-directionally with another wireless transceiver. The transceiver 715 may also include a modem to modulate the packets, to provide the modulated packets to one or more antennas 725 for transmission, and to demodulate packets received from the one or more antennas 725. The transceiver 715, or the transceiver 715 and one or more antennas 725, may be an example of a transmitter 415, a transmitter 515, a receiver 410, a receiver 510, or any combination thereof or component thereof, as described herein.

The memory 730 may include random access memory (RAM) and read-only memory (ROM). The memory 730 stores computer-readable, computer-executable code 735 including instructions that, when executed by the processor 740, cause the device 705 to perform various functions described herein. The code 735 may be stored in a non-transitory computer-readable medium such as system memory or another type of memory. In some cases, the code 735 may not be directly executable by the processor 740 but may cause a computer (e.g., when compiled and executed) to perform functions described herein. In some cases, the memory 730 may contain, among other things, a basic I/O system (BIOS) which may control basic hardware or software operation such as the interaction with peripheral components or devices.

The processor 740 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 740 may be configured to operate a memory array using a memory controller. In some other cases, a memory controller may be integrated into the processor 740. The processor 740 is configured to execute computer-readable instructions stored in a memory (e.g., the memory 730) to cause the device 705 to perform various functions (e.g., functions or tasks supporting compressed sequence of UCI bits). In particular, the device 705 or a component of the device 705 includes a processor 740 and memory 730 coupled to the processor 740, the processor 740 and memory 730 configured to perform various functions described herein.

The communications manager 720 may support wireless communication at a UE in accordance with examples as disclosed herein. For example, the communications manager 720 may be configured as or otherwise support a means for receiving an indication of a set of multiple accumulated feedback events that are each representative of different feedback combinations for reporting accumulated feedback for a set of scheduled downlink occasions. The communications manager 720 may be configured as or otherwise support a means for determining the accumulated feedback for the set of scheduled downlink occasions. The communications manager 720 may be configured as or otherwise support a means for selecting, from the set of multiple accumulated feedback events, a representative event based on the accumulated feedback. The communications manager 720 may be configured as or otherwise support a means for transmitting an uplink control message indicative of the representative event.

By including or configuring the communications manager 720 in accordance with examples as described herein, the device 705 may support techniques for improved communication reliability, more efficient utilization of communication resources, and improved coordination between devices, among other examples.

In some examples, the communications manager 720 may be configured to perform various operations (e.g., receiving, monitoring, transmitting) using or otherwise in cooperation with the transceiver 715, the one or more antennas 725, or any combination thereof. Although the communications manager 720 is illustrated as a separate component, in some examples, one or more functions described with reference to the communications manager 720 may be supported by or performed by the processor 740, the memory 730, the code 735, or any combination thereof. For example, the code 735 may include instructions executable by the processor 740 to cause the device 705 to perform various aspects of compressed sequence of UCI bits as described herein, or the processor 740 and the memory 730 may be otherwise configured to perform or support such operations.

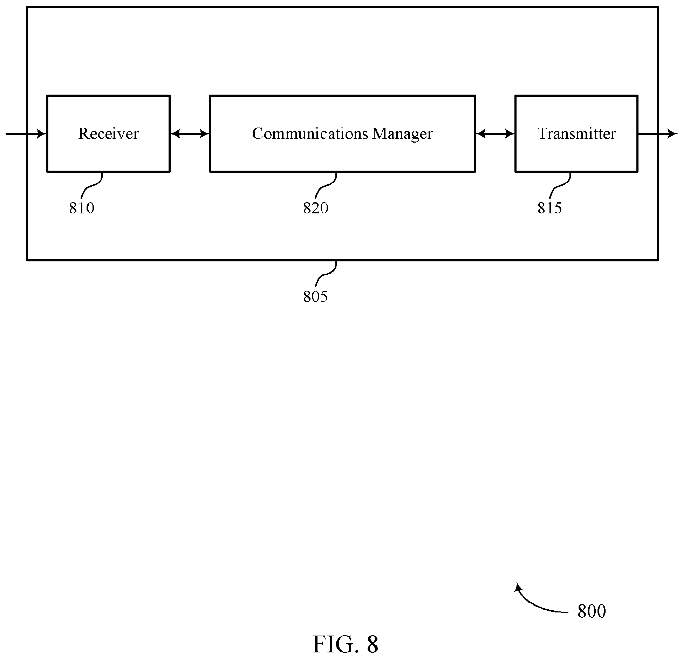

**FIG. 8** shows a block diagram 800 of a device 805 that supports compressed sequence of UCI bits in accordance with aspects of the present disclosure. The device 805 is an example of aspects of a base station 105 as described herein. The device 805 includes a receiver 810, a transmitter 815, and a communications manager 820. The device 805 also includes a processor. Each of these components may be in communication with one another (e.g., via one or more buses).

The receiver 810 may provide a means for receiving information such as packets, user data, control information, or any combination thereof associated with various information channels (e.g., control channels, data channels, information channels related to compressed sequence of UCI bits). Information may be passed on to other components of the device 805. The receiver 810 may utilize a single antenna or a set of multiple antennas.

The transmitter 815 may provide a means for transmitting signals generated by other components of the device 805. For example, the transmitter 815 may transmit information such as packets, user data, control information, or any combination thereof associated with various information channels (e.g., control channels, data channels, information channels related to compressed sequence of UCI bits). In some examples, the transmitter 815 may be co-located with a receiver 810 in a transceiver. The transmitter 815 may utilize a single antenna or a set of multiple antennas.

The communications manager 820, the receiver 810, the transmitter 815, or various combinations thereof or various components thereof may be examples of means for performing various aspects of compressed sequence of UCI bits as described herein. For example, the communications manager 820, the receiver 810, the transmitter 815, or various combinations or components thereof may support a method for performing one or more of the functions described herein.

In some examples, the communications manager 820, the receiver 810, the transmitter 815, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. Further, a processor and memory coupled with the processor are configured to perform one or more of the functions described herein (e.g., by executing, by the processor, instructions stored in the memory).

Additionally or alternatively, in some examples, the communications manager 820, the receiver 810, the transmitter 815, or various combinations or components thereof may be implemented in code (e.g., as communications management software or firmware) executed by a processor. If implemented in code executed by a processor, the functions of the communications manager 820, the receiver 810, the transmitter 815, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 820 may be configured to perform various operations (e.g., receiving, monitoring, transmitting) using or otherwise in cooperation with the receiver 810, the transmitter 815, or both. For example, the communications manager 820 may receive information from the receiver 810, send information to the transmitter 815, or be integrated in combination with the receiver 810, the transmitter 815, or both to receive information, transmit information, or perform various other operations as described herein.

The communications manager 820 may support wireless communication at a base station in accordance with examples as disclosed herein. For example, the communications manager 820 may be configured as or otherwise support a means for transmitting, to a UE, an indication of a set of multiple accumulated feedback events that are each representative of different feedback combinations for reporting, by the UE, accumulated feedback for a set of scheduled downlink occasions. The communications manager 820 may be configured as or otherwise support a means for receiving, from the UE, an uplink control message indicative of a representative event from the set of multiple accumulated feedback events. The communications manager 820 may be configured as or otherwise support a means for determining, based on the representative event, the accumulated feedback of the UE for the set of scheduled downlink occasions.

By including or configuring the communications manager 820 in accordance with examples as described herein, the device 805 (e.g., a processor controlling or otherwise coupled to the receiver 810, the transmitter 815, the communications manager 820, or a combination thereof) may support techniques for more efficient utilization of communication resources, among other examples.

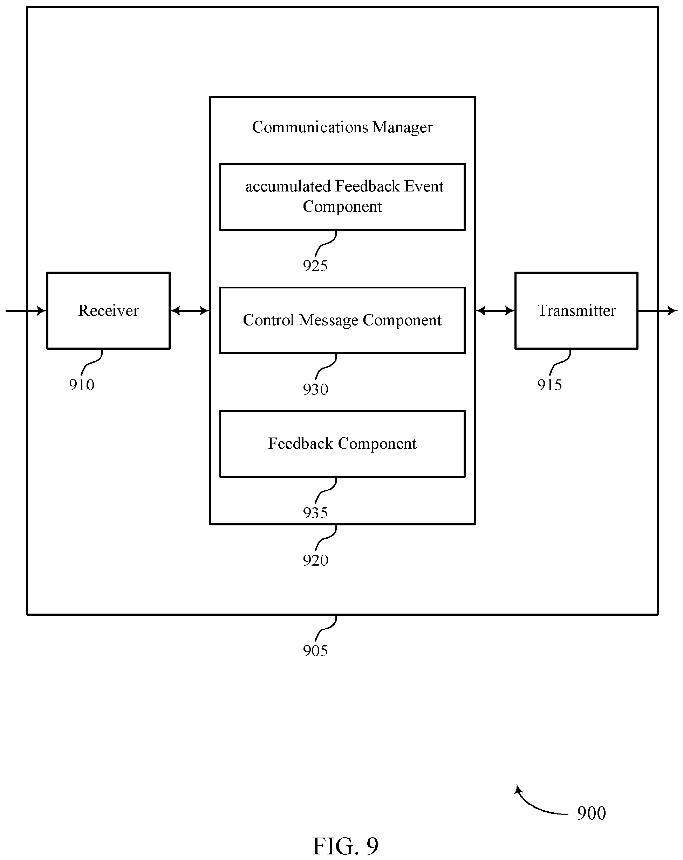

**FIG. 9** shows a block diagram 900 of a device 905 that supports compressed sequence of UCI bits in accordance with aspects of the present disclosure. The device 905 is an example of aspects of a device 805 or a base station 105 as described herein. The device 905 includes a receiver 910, a transmitter 915, and a communications manager 920. The device 905 also includes a processor. Each of these components may be in communication with one another (e.g., via one or more buses).

The receiver 910 may provide a means for receiving information such as packets, user data, control information, or any combination thereof associated with various information channels (e.g., control channels, data channels, information channels related to compressed sequence of UCI bits). Information may be passed on to other components of the device 905. The receiver 910 may utilize a single antenna or a set of multiple antennas.

The transmitter 915 may provide a means for transmitting signals generated by other components of the device 905. For example, the transmitter 915 may transmit information such as packets, user data, control information, or any combination thereof associated with various information channels (e.g., control channels, data channels, information channels related to compressed sequence of UCI bits). In some examples, the transmitter 915 may be co-located with a receiver 910 in a transceiver. The transmitter 915 may utilize a single antenna or a set of multiple antennas.

The device 905, or various components thereof, may be an example of means for performing various aspects of compressed sequence of UCI bits as described herein. For example, the communications manager 920 may include a accumulated feedback event component 925, a control message component 930, a feedback component 935, or any combination thereof. The communications manager 920 may be an example of aspects of a communications manager 820 as described herein. In some examples, the communications manager 920, or various components thereof, may be configured to perform various operations (e.g., receiving, monitoring, transmitting) using or otherwise in cooperation with the receiver 910, the transmitter 915, or both. For example, the communications manager 920 may receive information from the receiver 910, send information to the transmitter 915, or be integrated in combination with the receiver 910, the transmitter 915, or both to receive information, transmit information, or perform various other operations as described herein.

The communications manager 920 may support wireless communication at a base station in accordance with examples as disclosed herein. The accumulated feedback event component 925 may be configured as or otherwise support a means for transmitting, to a UE, an indication of a set of multiple accumulated feedback events that are each representative of different feedback combinations for reporting, by the UE, accumulated feedback for a set of scheduled downlink occasions. The control message component 930 may be configured as or otherwise support a means for receiving, from the UE, an uplink control message indicative of a representative event from the set of multiple accumulated feedback events. The feedback component 935 may be configured as or otherwise support a means for determining, based on the representative event, the accumulated feedback of the UE for the set of scheduled downlink occasions.

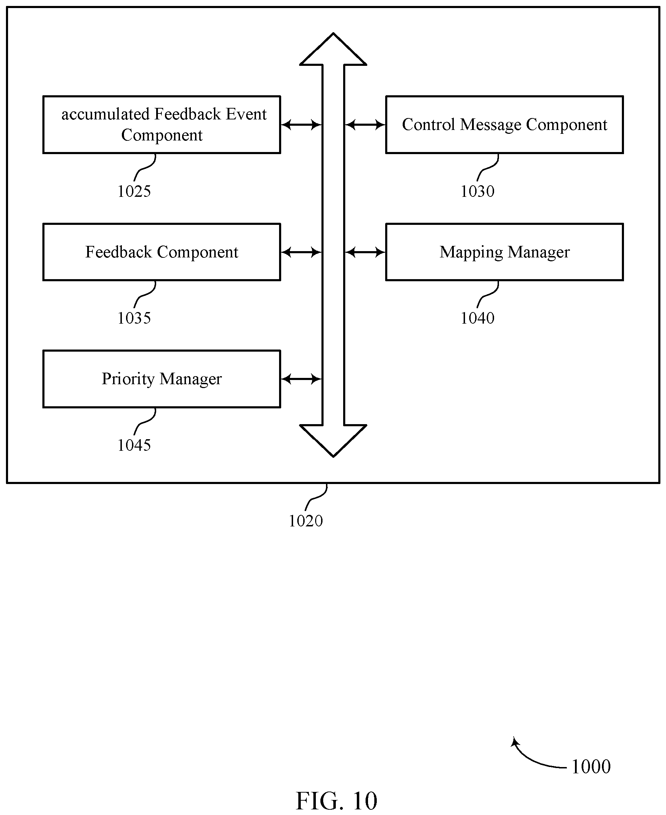

**FIG. 10** shows a block diagram 1000 of a communications manager 1020 that supports compressed sequence of UCI bits in accordance with aspects of the present disclosure. The communications manager 1020 may be an example of aspects of a communications manager 820, a communications manager 920, or both, as described herein. The communications manager 1020, or various components thereof, may be an example of means for performing various aspects of compressed sequence of UCI bits as described herein. For example, the communications manager 1020 may include a accumulated feedback event component 1025, a control message component 1030, a feedback component 1035, a mapping manager 1040, a priority manager 1045, or any combination thereof. Each of these components may communicate, directly or indirectly, with one another (e.g., via one or more buses).

The communications manager 1020 may support wireless communication at a base station in accordance with examples as disclosed herein. The accumulated feedback event component 1025 may be configured as or otherwise support a means for transmitting, to a UE, an indication of a set of multiple accumulated feedback events that are each representative of different feedback combinations for reporting, by the UE, accumulated feedback for a set of scheduled downlink occasions. The control message component 1030 may be configured as or otherwise support a means for receiving, from the UE, an uplink control message indicative of a representative event from the set of multiple accumulated feedback events. The feedback component 1035 may be configured as or otherwise support a means for determining, based on the representative event, the accumulated feedback of the UE for the set of scheduled downlink occasions.

In some examples, to support receiving the uplink control message, the control message component 1030 may be configured as or otherwise support a means for receiving a Huffman code for the representative event via one or more stages of the uplink control message.

In some examples, the received Huffman code is based on a relative priority for the representative event with respect to others of the set of multiple accumulated feedback events.

In some examples, the priority manager 1045 may be configured as or otherwise support a means for transmitting a priority indication of the representative event via at least one of RRC signaling or medium access control (MAC) control element (CE) signaling, where the relative priority is based on the priority indication.

In some examples, the priority manager 1045 may be configured as or otherwise support a means for transmitting one or more acknowledgment probability indicators associated with the set of scheduled downlink occasions, where the relative priority is based on the one or more acknowledgment probability indicators.

In some examples, to support receiving the Huffman code via the one or more stages of the uplink control message, the control message component 1030 may be configured as or otherwise support a means for receiving individual bits of the Huffman code on a per stage basis.

In some examples, the one or more stages of the uplink control message is a fixed number of stages. In some examples, the Huffman code has a number of bits that is equal to or less than the fixed number of stages.

In some examples, to support receiving the Huffman code via the one or more stages of the uplink control message, the control message component 1030 may be configured as or otherwise support a means for receiving individual bits of the Huffman code in different uplink control message resources.

In some examples, the different uplink control message resources are different time or frequency resources of a physical uplink control channel.

In some examples, to support receiving the individual bits of the Huffman code in the different uplink control message resources, the control message component 1030 may be configured as or otherwise support a means for receiving the individual bits of the Huffman code via different transmission power levels over the different uplink control message resources such that higher priority events of the set of multiple accumulated feedback events are received with higher transmission power levels.

In some examples, the mapping manager 1040 may be configured as or otherwise support a means for transmitting, to the UE, a first mapping of physical uplink control channel resources to the set of multiple accumulated feedback events.

In some examples, to support receiving the uplink control message, the control message component 1030 may be configured as or otherwise support a means for receiving a bit over a physical uplink control channel resource that corresponds to the representative event indicating that the representative event occurred based on the transmitted first mapping.

In some examples, the mapping manager 1040 may be configured as or otherwise support a means for transmitting, to a second UE, a second mapping of physical uplink control channel resources to accumulated feedback events, the second mapping different than the first mapping.

In some examples, the physical uplink control channel resources are differentiated by time, frequency, or both.

In some examples, to support transmitting the first mapping, the mapping manager 1040 may be configured as or otherwise support a means for transmitting the first mapping via at least one of RRC signaling or medium access control (MAC) control element (CE) signaling.

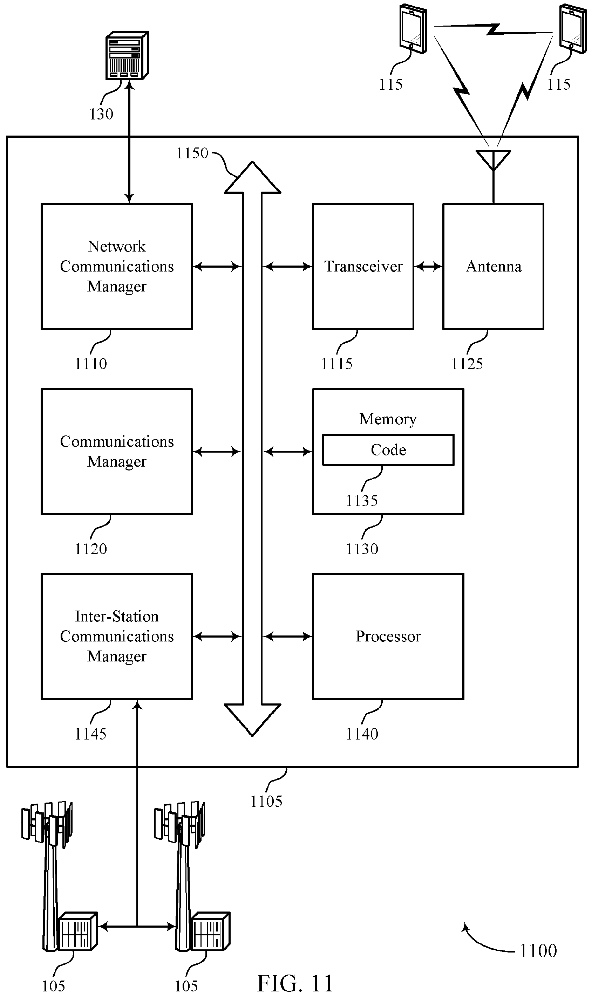

**FIG. 11** shows a diagram of a system 1100 including a device 1105 that supports compressed sequence of UCI bits in accordance with aspects of the present disclosure. The device 1105 is or includes the components of a device 805, a device 905, or a base station 105 as described herein. The device 1105 may communicate wirelessly with one or more base stations 105, UEs 115, or any combination thereof. The device 1105 includes components for bi-directional voice and data communications including components for transmitting and receiving communications, such as a communications manager 1120, a network communications manager 1110, a transceiver 1115, an antenna 1125, a memory 1130, code 1135, a processor 1140, and an inter-station communications manager 1145. These components may be in electronic communication or otherwise coupled (e.g., operatively, communicatively, functionally, electronically, electrically) via one or more buses (e.g., a bus 1150).

The network communications manager 1110 may manage communications with a core network 130 (e.g., via one or more wired backhaul links). For example, the network communications manager 1110 may manage the transfer of data communications for client devices, such as one or more UEs 115.

In some cases, the device 1105 may include a single antenna 1125. However, in some other cases the device 1105 may have more than one antenna 1125, which may be capable of concurrently transmitting or receiving multiple wireless transmissions. The transceiver 1115 may communicate bi-directionally, via the one or more antennas 1125, wired, or wireless links as described herein. For example, the transceiver 1115 may represent a wireless transceiver and may communicate bi-directionally with another wireless transceiver. The transceiver 1115 may also include a modem to modulate the packets, to provide the modulated packets to one or more antennas 1125 for transmission, and to demodulate packets received from the one or more antennas 1125. The transceiver 1115, or the transceiver 1115 and one or more antennas 1125, may be an example of a transmitter 815, a transmitter 915, a receiver 810, a receiver 910, or any combination thereof or component thereof, as described herein.

The memory 1130 may include RAM and ROM. The memory 1130 stores computer-readable, computer-executable code 1135 including instructions that when executed by the processor 1140, cause the device 1105 to perform various functions described herein. The code 1135 may be stored in a non-transitory computer-readable medium such as system memory or another type of memory. In some cases, the code 1135 may not be directly executable by the processor 1140 but may cause a computer (e.g., when compiled and executed) to perform functions described herein. In some cases, the memory 1130 may contain, among other things, a BIOS which may control basic hardware or software operation such as the interaction with peripheral components or devices.

The processor 1140 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1140 may be configured to operate a memory array using a memory controller. In some other cases, a memory controller may be integrated into the processor 1140. The processor 1140 is configured to execute computer-readable instructions stored in a memory (e.g., the memory 1130) to cause the device 1105 to perform various functions (e.g., functions or tasks supporting compressed sequence of UCI bits). In particular, the device 1105 or a component of the device 1105 includes a processor 1140 and memory 1130 coupled to the processor 1140, the processor 1140 and memory 1130 configured to perform various functions described herein.

The inter-station communications manager 1145 may manage communications with other base stations 105, and may include a controller or scheduler for controlling communications with UEs 115 in cooperation with other base stations 105. For example, the inter-station communications manager 1145 may coordinate scheduling for transmissions to UEs 115 for various interference mitigation techniques such as beamforming or joint transmission. In some examples, the inter-station communications manager 1145 may provide an X2 interface within an LTE/LTE-A wireless communications network technology to provide communication between base stations 105.

The communications manager 1120 may support wireless communication at a base station in accordance with examples as disclosed herein. For example, the communications manager 1120 may be configured as or otherwise support a means for transmitting, to a UE, an indication of a set of multiple accumulated feedback events that are each representative of different feedback combinations for reporting, by the UE, accumulated feedback for a set of scheduled downlink occasions. The communications manager 1120 may be configured as or otherwise support a means for receiving, from the UE, an uplink control message indicative of a representative event from the set of multiple accumulated feedback events. The communications manager 1120 may be configured as or otherwise support a means for determining, based on the representative event, the accumulated feedback of the UE for the set of scheduled downlink occasions.

By including or configuring the communications manager 1120 in accordance with examples as described herein, the device 1105 may support techniques for improved communication reliability, more efficient utilization of communication resources, and improved coordination between devices, among other examples.

In some examples, the communications manager 1120 may be configured to perform various operations (e.g., receiving, monitoring, transmitting) using or otherwise in cooperation with the transceiver 1115, the one or more antennas 1125, or any combination thereof. Although the communications manager 1120 is illustrated as a separate component, in some examples, one or more functions described with reference to the communications manager 1120 may be supported by or performed by the processor 1140, the memory 1130, the code 1135, or any combination thereof. For example, the code 1135 may include instructions executable by the processor 1140 to cause the device 1105 to perform various aspects of compressed sequence of UCI bits as described herein, or the processor 1140 and the memory 1130 may be otherwise configured to perform or support such operations.

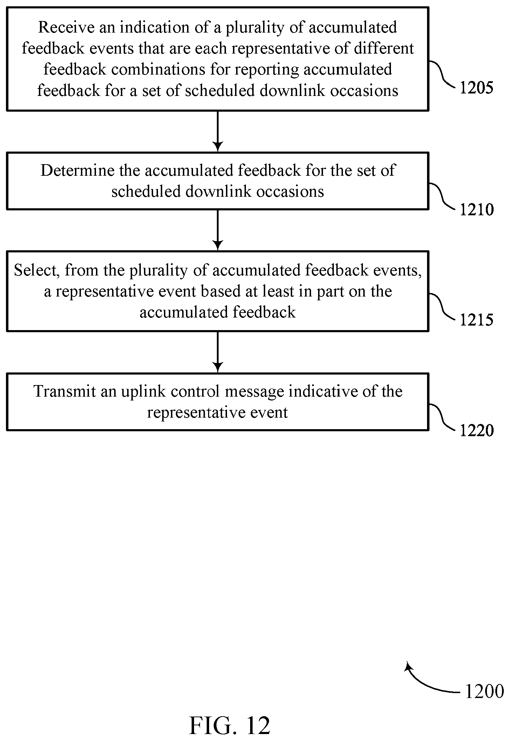

**FIG. 12** shows a flowchart illustrating a method 1200 that supports compressed sequence of UCI bits in accordance with aspects of the present disclosure. The operations of the method 1200 are implemented by a UE or its components as described herein. In particular, the operations of the method 1200 are performed by a UE 115 as described with reference to FIGs. 1 through 7. Further, a UE executes a set of instructions to control the functional elements of the UE to perform the described functions. Additionally or alternatively, the UE may perform aspects of the described functions using special-purpose hardware.

At 1205, the method includes receiving an indication of a set of multiple accumulated feedback events that are each representative of different feedback combinations for reporting accumulated feedback for a set of scheduled downlink occasions. The operations of 1205 may be performed in accordance with examples as disclosed herein. In some examples, aspects of the operations of 1205 may be performed by an accumulated feedback event indication component 625 as described with reference to FIG. 6.

At 1210, the method includes determining the accumulated feedback for the set of scheduled downlink occasions. The operations of 1210 may be performed in accordance with examples as disclosed herein. In some examples, aspects of the operations of 1210 may be performed by a feedback component 630 as described with reference to FIG. 6.

At 1215, the method includes selecting, from the set of multiple accumulated feedback events, a representative event based on the accumulated feedback. The operations of 1215 may be performed in accordance with examples as disclosed herein. In some examples, aspects of the operations of 1215 may be performed by a representative event selection component 635 as described with reference to FIG. 6.

At 1220, the method includes transmitting an uplink control message indicative of the representative event. The operations of 1220 may be performed in accordance with examples as disclosed herein. In some examples, aspects of the operations of 1220 may be performed by an uplink control message component 640 as described with reference to FIG. 6.

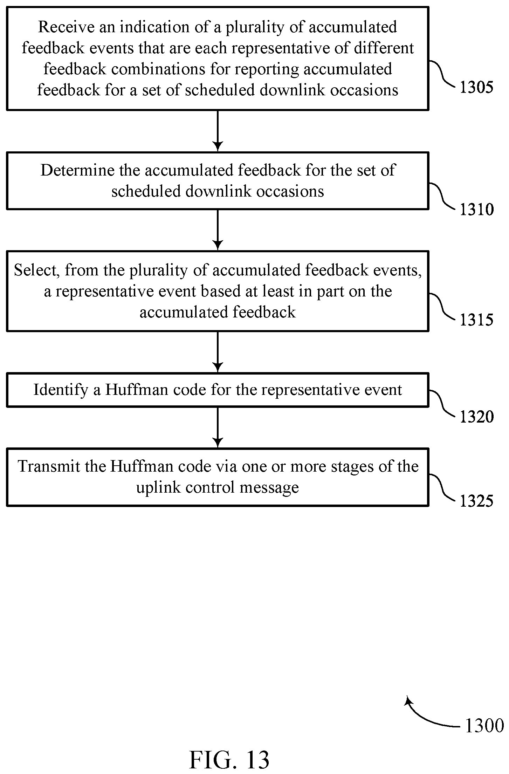

**FIG. 13** shows a flowchart illustrating a method 1300 that supports compressed sequence of UCI bits in accordance with aspects of the present disclosure. The operations of the method 1300 are implemented by a UE or its components as described herein. In particular, the operations of the method 1300 are performed by a UE 115 as described with reference to FIGs. 1 through 7. Further, a UE executes a set of instructions to control the functional elements of the UE to perform the described functions. Additionally or alternatively, the UE may perform aspects of the described functions using special-purpose hardware.

At 1305, the method includes receiving an indication of a set of multiple accumulated feedback events that are each representative of different feedback combinations for reporting accumulated feedback for a set of scheduled downlink occasions. The operations of 1305 may be performed in accordance with examples as disclosed herein. In some examples, aspects of the operations of 1305 may be performed by an accumulated feedback event indication component 625 as described with reference to FIG. 6.

At 1310, the method includes determining the accumulated feedback for the set of scheduled downlink occasions. The operations of 1310 may be performed in accordance with examples as disclosed herein. In some examples, aspects of the operations of 1310 may be performed by a feedback component 630 as described with reference to FIG. 6.

At 1315, the method includes selecting, from the set of multiple accumulated feedback events, a representative event based on the accumulated feedback. The operations of 1315 may be performed in accordance with examples as disclosed herein. In some examples, aspects of the operations of 1315 may be performed by a representative event selection component 635 as described with reference to FIG. 6.

At 1320, the method includes identifying a Huffman code for the representative event. The operations of 1320 may be performed in accordance with examples as disclosed herein. In some examples, aspects of the operations of 1320 may be performed by a Huffman coding component 645 as described with reference to FIG. 6.

At 1325, the method includes transmitting the Huffman code via one or more stages of the uplink control message. The operations of 1325 may be performed in accordance with examples as disclosed herein. In some examples, aspects of the operations of 1325 may be performed by an uplink control message component 640 as described with reference to FIG. 6.

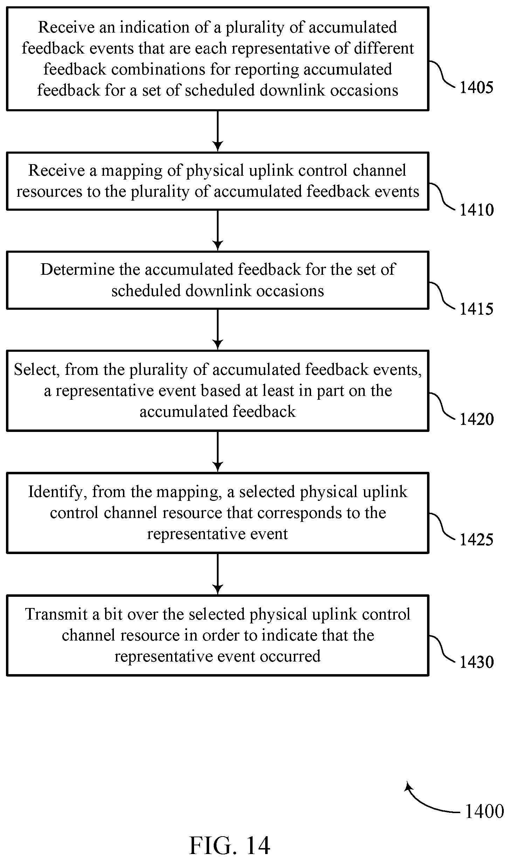

**FIG. 14** shows a flowchart illustrating a method 1400 that supports compressed sequence of UCI bits in accordance with aspects of the present disclosure. The operations of the method 1400 are implemented by a UE or its components as described herein. In particular, the operations of the method 1400 are performed by a UE 115 as described with reference to FIGs. 1 through 7. Further, a UE executes a set of instructions to control the functional elements of the UE to perform the described functions. Additionally or alternatively, the UE may perform aspects of the described functions using special-purpose hardware.

At 1405, the method includes receiving an indication of a set of multiple accumulated feedback events that are each representative of different feedback combinations for reporting accumulated feedback for a set of scheduled downlink occasions. The operations of 1405 may be performed in accordance with examples as disclosed herein. In some examples, aspects of the operations of 1405 may be performed by an accumulated feedback event indication component 625 as described with reference to FIG. 6.

At 1410, the method may include receiving a mapping of physical uplink control channel resources to the set of multiple accumulated feedback events. The operations of 1410 may be performed in accordance with examples as disclosed herein. In some examples, aspects of the operations of 1410 may be performed by a mapping component 650 as described with reference to FIG. 6.

At 1415, the method includes determining the accumulated feedback for the set of scheduled downlink occasions. The operations of 1415 may be performed in accordance with examples as disclosed herein. In some examples, aspects of the operations of 1415 may be performed by a feedback component 630 as described with reference to FIG. 6.

At 1420, the method includes selecting, from the set of multiple accumulated feedback events, a representative event based on the accumulated feedback. The operations of 1420 may be performed in accordance with examples as disclosed herein. In some examples, aspects of the operations of 1420 may be performed by a representative event selection component 635 as described with reference to FIG. 6.

At 1425, the method may include identifying, from the mapping, a selected physical uplink control channel resource that corresponds to the representative event. The operations of 1430 may be performed in accordance with examples as disclosed herein. In some examples, aspects of the operations of 1430 may be performed by a mapping component 650 as described with reference to FIG. 6.

At 1430, the method may include transmitting a bit over the selected physical uplink control channel resource in order to indicate that the representative event occurred. The operations of 1430 may be performed in accordance with examples as disclosed herein. In some examples, aspects of the operations of 1430 may be performed by an uplink control message component 640 as described with reference to FIG. 6.

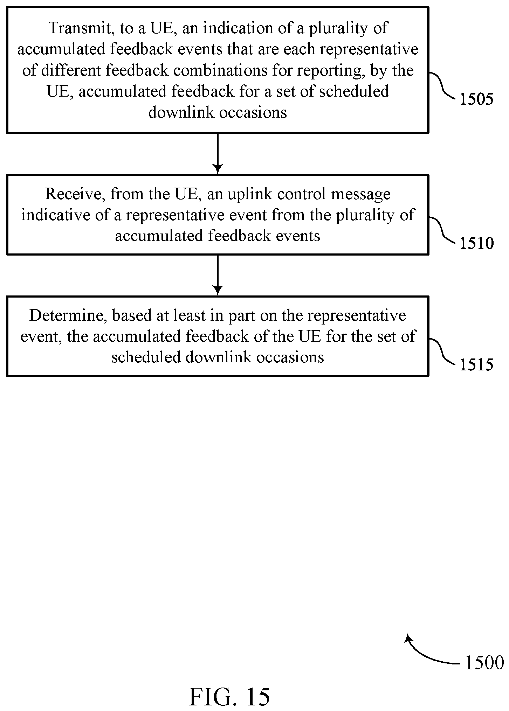

**FIG. 15** shows a flowchart illustrating a method 1500 that supports compressed sequence of UCI bits in accordance with aspects of the present disclosure. The operations of the method 1500 are implemented by a base station or its components as described herein. In particular, the operations of the method 1500 are performed by a base station 105 as described with reference to FIGs. 1 through 3 and 8 through 11. Further, a base station executes a set of instructions to control the functional elements of the base station to perform the described functions. Additionally or alternatively, the base station may perform aspects of the described functions using special-purpose hardware.

At 1505, the method includes transmitting, to a UE, an indication of a set of multiple accumulated feedback events that are each representative of different feedback combinations for reporting, by the UE, accumulated feedback for a set of scheduled downlink occasions. The operations of 1505 may be performed in accordance with examples as disclosed herein. In some examples, aspects of the operations of 1505 may be performed by a accumulated feedback event component 1025 as described with reference to FIG. 10.

At 1510, the method includes receiving, from the UE, an uplink control message indicative of a representative event from the set of multiple accumulated feedback events. The operations of 1510 may be performed in accordance with examples as disclosed herein. In some examples, aspects of the operations of 1510 may be performed by a control message component 1030 as described with reference to FIG. 10.

At 1515, the method includes determining, based on the representative event, the accumulated feedback of the UE for the set of scheduled downlink occasions. The operations of 1515 may be performed in accordance with examples as disclosed herein. In some examples, aspects of the operations of 1515 may be performed by a feedback component 1035 as described with reference to FIG. 10.

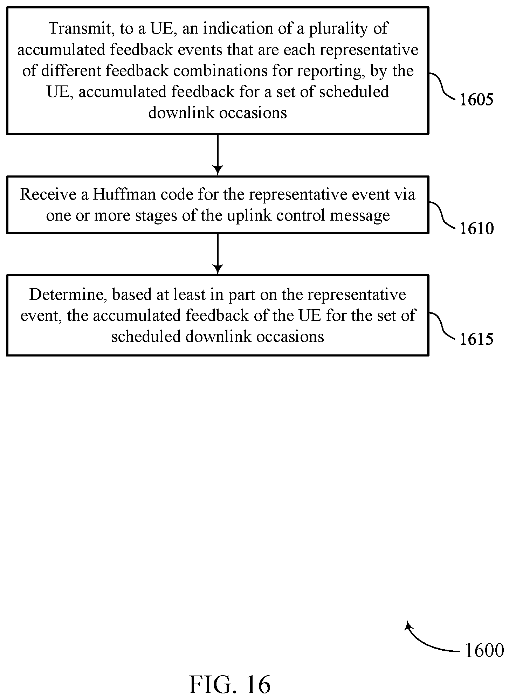

**FIG. 16** shows a flowchart illustrating a method 1600 that supports compressed sequence of UCI bits in accordance with aspects of the present disclosure. The operations of the method 1600 are implemented by a base station or its components as described herein. In particular, the operations of the method 1600 are performed by a base station 105 as described with reference to FIGs. 1 through 3 and 8 through 11 Further, a base station executes a set of instructions to control the functional elements of the base station to perform the described functions. Additionally or alternatively, the base station may perform aspects of the described functions using special-purpose hardware.

At 1605, the method includes transmitting, to a UE, an indication of a set of multiple accumulated feedback events that are each representative of different feedback combinations for reporting, by the UE, accumulated feedback for a set of scheduled downlink occasions. The operations of 1605 may be performed in accordance with examples as disclosed herein. In some examples, aspects of the operations of 1605 may be performed by a accumulated feedback event component 1025 as described with reference to FIG. 10.

At 1610, the method includes receiving a Huffman code for the representative event via one or more stages of the uplink control message. The operations of 1610 may be performed in accordance with examples as disclosed herein. In some examples, aspects of the operations of 1610 may be performed by a control message component 1030 as described with reference to FIG. 10.

At 1615, the method includes determining, based on the representative event, the accumulated feedback of the UE for the set of scheduled downlink occasions. The operations of 1615 may be performed in accordance with examples as disclosed herein. In some examples, aspects of the operations of 1615 may be performed by a feedback component 1035 as described with reference to FIG. 10.

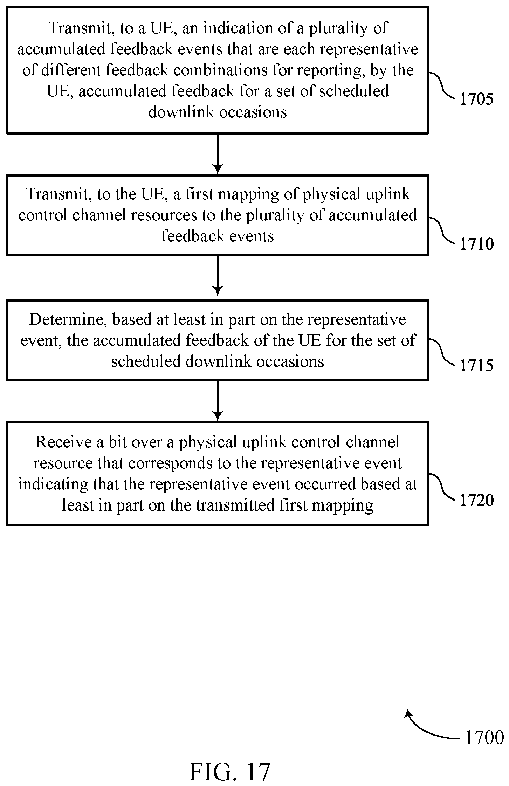

**FIG. 17** shows a flowchart illustrating a method 1700 that supports compressed sequence of UCI bits in accordance with aspects of the present disclosure. The operations of the method 1700 are implemented by a base station or its components as described herein. In particular, the operations of the method 1700 are performed by a base station 105 as described with reference to FIGs. 1 through 3 and 8 through 11. Further, a base station executes a set of instructions to control the functional elements of the base station to perform the described functions. Additionally or alternatively, the base station may perform aspects of the described functions using special-purpose hardware.

At 1705, the method includes transmitting, to a UE, an indication of a set of multiple accumulated feedback events that are each representative of different feedback combinations for reporting, by the UE, accumulated feedback for a set of scheduled downlink occasions. The operations of 1705 may be performed in accordance with examples as disclosed herein. In some examples, aspects of the operations of 1705 may be performed by a accumulated feedback event component 1025 as described with reference to FIG. 10.

At 1710, the method may include transmitting, to the UE, a first mapping of physical uplink control channel resources to the set of multiple accumulated feedback events. The operations of 1710 may be performed in accordance with examples as disclosed herein. In some examples, aspects of the operations of 1710 may be performed by a mapping manager 1040 as described with reference to FIG. 10.

At 1715, the method includes determining, based on the representative event, the accumulated feedback of the UE for the set of scheduled downlink occasions. The operations of 1715 may be performed in accordance with examples as disclosed herein. In some examples, aspects of the operations of 1715 may be performed by a feedback component 1035 as described with reference to FIG. 10.

At 1720, the method may include receiving a bit over a physical uplink control channel resource that corresponds to the representative event indicating that the representative event occurred based on the transmitted first mapping. The operations of 1720 may be performed in accordance with examples as disclosed herein. In some examples, aspects of the operations of 1720 may be performed by a control message component 1030 as described with reference to FIG. 10.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

## Claims

1. A method for wireless communication performed by a user equipment, UE, the method comprising:
receiving (1205) an indication of a plurality of accumulated feedback events that are each representative of different feedback combinations for reporting accumulated feedback for a set of scheduled downlink occasions;
determining (1210) the accumulated feedback for the set of scheduled downlink occasions;
selecting (1215), from the plurality of accumulated feedback events, a representative event based at least in part on the accumulated feedback; and
transmitting (1220) an uplink control message indicative of the representative event, wherein transmitting (1220) the uplink control message further comprises:
identifying (1320) a Huffman code for the representative event; and
transmitting (1325) the Huffman code via one or more stages of the uplink control message, wherein transmitting the Huffman code via the one or more stages of the uplink control message further comprises transmitting individual bits of the Huffman code in different uplink control message resources.

2. The method of claim 1, wherein identifying the Huffman code further comprises:
determining a relative priority for the representative event with respect to others of the plurality of accumulated feedback events; and
identifying the Huffman code based at least in part on the relative priority for the representative event.

3. The method of claim 2, wherein determining the relative priority for the representative event further comprises:
receiving a priority indication of the representative event via at least one of radio resource control, RRC, signaling or medium access control, MAC, control element, CE, signaling, wherein the relative priority is based at least in part on the priority indication; or
wherein determining the relative priority for the representative event further comprises:
receiving one or more acknowledgment probability indicators associated with the set of scheduled downlink occasions; and
determining the relative priority for the representative event based at least in part on the one or more acknowledgment probability indicators.

4. The method of claim 1, wherein transmitting the Huffman code via the one or more stages of the uplink control message further comprises:
transmitting individual bits of the Huffman code on a per stage basis, and optionally wherein:
the one or more stages of the uplink control message is a fixed number of stages, and
the Huffman code has a number of bits that is equal to or less than the fixed number of stages.

5. The method of claim 1, wherein the different uplink control message resources are different time or frequency resources of a physical uplink control channel.

6. The method of claim 1, wherein transmitting the individual bits of the Huffman code in the different uplink control message resources further comprises:
using different transmission power levels for transmission over the different uplink control message resources such that transmission of higher priority events of the plurality of accumulated feedback events is associated with higher transmission power levels.

7. The method of claim 1, further comprising:
receiving a mapping of physical uplink control channel resources to the plurality of accumulated feedback events;
identifying, from the mapping, a selected physical uplink control channel resource that corresponds to the representative event; and
transmitting a bit over the selected physical uplink control channel resource in order to indicate that the representative event occurred.

8. The method of claim 7, wherein the mapping is different for different UEs, and/or wherein the physical uplink control channel resources are differentiated by time, frequency, or both.

9. The method of claim 7, wherein receiving the mapping further comprises:
receiving the mapping via at least one of radio resource control, RRC, signaling or medium access control, MAC, control element, CE, signaling.

10. A method for wireless communication performed by a base station, the method comprising:
transmitting (1505), to a user equipment, UE, an indication of a plurality of accumulated feedback events that are each representative of different feedback combinations for reporting, by the UE, accumulated feedback for a set of scheduled downlink occasions;
receiving (1510), from the UE, an uplink control message indicative of a representative event from the plurality of accumulated feedback events, wherein receiving (1510) the uplink control message comprises receiving (1610) a Huffman code for the representative event via one or more stages of the uplink control message and wherein receiving the Huffman code via the one or more stages of the uplink control message further comprises receiving individual bits of the Huffman code in different uplink control message resources; and
determining (1515), based at least in part on the representative event, the accumulated feedback of the UE for the set of scheduled downlink occasions.

11. The method of claim 10, wherein receiving the individual bits of the Huffman code in the different uplink control message resources further comprises:
receiving the individual bits of the Huffman code via different transmission power levels over the different uplink control message resources such that higher priority events of the plurality of accumulated feedback events are received with higher transmission power levels.

12. The method of claim 10, further comprising:
transmitting, to the UE, a first mapping of physical uplink control channel resources to the plurality of accumulated feedback events.

13. The method of claim 12, further comprising:
transmitting, to a second UE, a second mapping of physical uplink control channel resources to accumulated feedback events, the second mapping different than the first mapping.

14. An apparatus (705) for wireless communication at a user equipment, UE, comprising:
a processor (740);
memory (730) coupled with the processor (740); and
instructions stored in the memory (730) and executable by the processor (740) to cause the apparatus to execute the method steps of any of claims 1 to 9.

15. An apparatus (1105) for wireless communication at a base station, comprising:
a processor (1140);
memory (1130) coupled with the processor (1140); and
instructions stored in the memory (1130) and executable by the processor (1140) to cause the apparatus to execute the method steps of any of claims 10 to 13.

## Patentansprüche

1. Ein Verfahren für eine drahtlose Kommunikation, das durch ein Benutzergerät (User Equipment bzw. UE) durchgeführt wird, wobei das Verfahren aufweist:
Empfangen (1205) einer Angabe einer Vielzahl von Ereignissen für akkumulierte Rückmeldung bzw. Feedback, die jeweils für verschiedene Rückmeldungskombinationen für das Berichten einer akkumulierten Rückmeldung bzw. eines akkumulierten Feedbacks für einen Satz von geplanten Downlink-Gelegenheiten repräsentativ sind,
Bestimmen (1210) der akkumulierten Rückmeldung für den Satz von geplanten Downlink-Gelegenheiten,
Auswählen (1215), aus der Vielzahl von Ereignissen für akkumulierte Rückmeldung, eines repräsentativen Ereignisses basierend wenigstens teilweise auf der akkumulierten Rückmeldung, und
Senden (1220) einer Uplink-Steuernachricht, die das repräsentative Ereignis angibt, wobei das Senden (1220) der Uplink-Steuernachricht weiterhin aufweist:
Identifizieren (1320) eines Huffman-Codes für das repräsentative Ereignis, und
Senden (1325) des Huffman-Codes über eine oder mehrere Stufen der Uplink-Steuernachricht, wobei das Senden des Huffman-Codes über die eine oder die mehreren Stufen der Uplink-Steuernachricht weiterhin das Senden von einzelnen Bits des Huffman-Codes in verschiedenen Uplink-Steuernachrichtressourcen aufweist.

2. Verfahren nach Anspruch 1, wobei das Identifizieren des Huffman-Codes weiterhin aufweist:
Bestimmen einer relativen Priorität für das repräsentative Ereignis in Bezug auf andere aus der Vielzahl von Ereignissen für akkumulierte Rückmeldung, und
Identifizieren des Huffman-Codes basierend wenigstens teilweise auf der relativen Priorität für das repräsentative Ereignis.

3. Verfahren nach Anspruch 2, wobei das Bestimmen der relativen Priorität für das repräsentative Ereignis weiterhin aufweist:
Empfangen einer Prioritätsangabe des repräsentativen Ereignisses über eine Funkressourcensteuerung (Radio Resource Control bzw. RRC)-Signalisierung und/oder eine MAC (Medium Access Control)-Steuerelement (Control Element bzw. CE)-Signalisierung, wobei die relative Priorität wenigstens teilweise auf der Prioritätsangabe basiert, oder
wobei das Bestimmen der relativen Priorität für das repräsentative Ereignis weiterhin aufweist:
Empfangen eines oder mehrerer Bestätigungswahrscheinlichkeit-Indikatoren, die mit dem Satz von geplanten Downlink-Gelegenheiten assoziiert sind, und
Bestimmen der relativen Priorität für das repräsentative Ereignis basierend wenigstens teilweise auf dem einen oder den mehreren Bestätigungswahrscheinlichkeit-Indikatoren.

4. Verfahren nach Anspruch 1, wobei das Senden des Huffman-Codes über die eine oder die mehreren Stufen der Uplink-Steuernachricht weiterhin aufweist:
Senden von einzelnen Bits des Huffman-Codes auf einer pro-Stufe-Basis,
wobei optional:
die eine oder die mehreren Stufen der Uplink-Steuernachricht eine fixe Anzahl von Stufen umfassen, und
der Huffman-Code eine Anzahl von Bits, die gleich oder kleiner als die fixe Anzahl von Stufen ist, aufweist.

5. Verfahren nach Anspruch 1, wobei die verschiedenen Uplink-Steuernachricht-Ressourcen verschiedene Zeit- oder Frequenzressourcen eines physikalischen Uplink-Steuerkanals sind.

6. Verfahren nach Anspruch 1, wobei das Senden der einzelnen Bits des Huffman-Codes in den verschiedenen Uplink-Steuernachricht-Ressourcen weiterhin aufweist:
Verwenden von verschiedenen Sendeleistungspegeln für das Senden über die verschiedenen Uplink-Steuernachricht-Ressourcen derart, dass das Senden von Ereignissen einer höheren Priorität aus der Vielzahl von Ereignissen für akkumulierte Rückmeldung mit höheren Sendeleistungspegeln assoziiert ist.

7. Verfahren nach Anspruch 1, das weiterhin aufweist:
Empfangen eines Mappings von Physikalischer-Uplink-Steuerkanal-Ressourcen auf die Vielzahl von Ereignissen für akkumulierte Rückmeldung,
Identifizieren, aus dem Mapping, einer ausgewählten physikalischen Uplink-Steuerkanal-Ressource, die dem repräsentativen Ereignis entspricht, und
Senden eines Bits über die ausgewählte Physikalischer-Uplink-Steuerkanal-Ressource, um anzugeben, dass das repräsentative Ereignis aufgetreten ist.

8. Verfahren nach Anspruch 7, wobei das Mapping für verschiedene UEs verschieden ist und/oder wobei die Physikalischer-Uplink-Steuerkanal-Ressourcen durch die Zeit und/oder die Frequenz differenziert sind.

9. Verfahren nach Anspruch 7, wobei das Empfangen des Mappings weiterhin aufweist:
Empfangen des Mappings über eine Funkressourcensteuerung (Radio Resource Control bzw. RRC)-Signalisierung und/oder eine MAC (Medium Access Control)-Steuerelement (Control Element bzw. CE)-Signalisierung.

10. Ein Verfahren für eine drahtlose Kommunikation, das durch eine Basisstation durchgeführt wird, wobei das Verfahren aufweist:
Senden (1505), an ein Benutzergerät (User Equipment bzw. UE), einer Angabe einer Vielzahl von Ereignissen für akkumulierte Rückmeldung bzw. Feedback, die jeweils für verschiedene Rückmeldungskombinationen für das Berichten, durch das UE, einer akkumulierten Rückmeldung für einen Satz von geplanten Downlink-Gelegenheiten repräsentativ sind,
Empfangen (1510), von dem UE, einer Uplink-Steuernachricht, die ein repräsentatives Ereignis aus der Vielzahl von Ereignissen für akkumulierte Rückmeldung angibt, wobei das Empfangen (1510) der Uplink-Steuernachricht das Empfangen (1610) eines Huffman-Codes für das repräsentative Ereignis über eine oder mehrere Stufen der Uplink-Steuernachricht aufweist und wobei das Empfangen des Huffman-Codes über die eine oder die mehreren Stufen der Uplink-Steuernachricht weiterhin das Empfangen von einzelnen Bits des Huffman-Codes in verschiedenen Uplink-Steuernachricht-Ressourcen aufweist, und
Bestimmen (1515), basierend wenigstens teilweise auf dem repräsentativen Ereignis, der akkumulierten Rückmeldung des UE für den Satz von geplanten Downlink-Gelegenheiten.

11. Verfahren nach Anspruch 10, wobei das Empfangen der einzelnen Bits des Huffman-Codes in den verschiedenen Uplink-Steuernachricht-Ressourcen weiterhin aufweist:
Empfangen der einzelnen Bits des Huffman-Codes mit verschiedenen Sendeleistungspegeln über die verschiedenen Uplink-Steuernachricht-Ressourcen derart, dass Ereignisse mit einer höheren Priorität aus der Vielzahl von akkumulierten Rückmeldungsereignissen mit höheren Sendeleistungspegeln empfangen werden.

12. Verfahren nach Anspruch 10, das weiterhin aufweist:
Senden, an das UE, eines ersten Mappings von Physikalischer-Uplink-steuerkanal-Ressourcen auf die Vielzahl von Ereignissen für akkumulierte Rückmeldung.

13. Verfahren nach Anspruch 12, das weiterhin aufweist:
Senden, an ein zweites UE, eines zweiten Mappings von Physikalischer-Uplink-Steuerkanal-Ressourcen auf Ereignisse für akkumulierte Rückmeldung, wobei das zweite Mapping von dem ersten Mapping verschieden ist.

14. Eine Vorrichtung (705) für eine drahtlose Kommunikation an einem Benutzergerät (User Equipment bzw. UE), aufweisend:
einen Prozessor (740),
einen Speicher (730), der mit dem Prozessor (740) gekoppelt ist, und
Befehle, die in dem Speicher (730) gespeichert sind und durch den Prozessor (740) ausgeführt werden können, um die Vorrichtung zum Ausführen der Verfahrensschritte gemäß einem der Ansprüche 1 bis 9 zu veranlassen.

15. Eine Vorrichtung (1105) für eine drahtlose Kommunikation an einer Basisstation, aufweisend:
einen Prozessor (1140),
einen Speicher (1130), der mit dem Prozessor (1140) gekoppelt ist, und
Befehle, die in dem Speicher (1130) gespeichert sind und durch den Prozessor (1140) ausgeführt werden können, um die Vorrichtung zum Ausführen der Verfahrensschritte gemäß einem der Ansprüche 10 bis 13 zu veranlassen.

## Revendications

1. Procédé de communication sans fil réalisé par un équipement utilisateur, UE, le procédé comprenant :
une réception (1205) d'une indication d'une pluralité d'événements de retour accumulé qui sont chacun représentatifs de différentes combinaisons de retour pour rapporter un retour accumulé pour un ensemble d'occasions de liaison descendante planifiées ;
une détermination (1210) du retour accumulé pour l'ensemble d'occasions de liaison descendante planifiées ;
une sélection (1215), parmi la pluralité d'événements de retour accumulé, d'un événement représentatif sur la base au moins en partie du retour accumulé ; et
une transmission (1220) d'un message de commande de liaison montante indicatif de l'événement représentatif, dans lequel la transmission (1220) du message de commande de liaison montante comprend en outre :
une identification (1320) d'un code de Huffman pour l'événement représentatif ; et
une transmission (1325) du code de Huffman via un ou plusieurs étages du message de commande de liaison montante, dans lequel la transmission du code de Huffman via les un ou plusieurs étages du message de commande de liaison montante comprend en outre une transmission des bits individuels du code de Huffman dans différentes ressources de message de commande de liaison montante.

2. Procédé selon la revendication 1, dans lequel l'identification du code de Huffman comprend en outre :
une détermination d'une priorité relative pour l'événement représentatif par rapport aux autres de la pluralité d'événements de retour accumulé ; et
une identification du code de Huffman sur la base au moins en partie de la priorité relative pour l'événement représentatif.

3. Procédé selon la revendication 2, dans lequel la détermination de la priorité relative pour l'événement représentatif comprend en outre :
une réception d'une indication de priorité de l'événement représentatif via au moins une parmi une signalisation de commande de ressource radio, RRC, ou une signalisation d'élément de commande, CE, de commande d'accès au support, MAC, dans lequel la priorité relative est basée au moins en partie sur l'indication de priorité ; ou
dans lequel la détermination de la priorité relative pour l'événement représentatif comprend en outre :
une réception d'un ou de plusieurs indicateurs de probabilité d'accusé de réception associés à l'ensemble d'occasions de liaison descendante planifiées ; et
une détermination de la priorité relative pour l'événement représentatif sur la base au moins en partie des un ou plusieurs indicateurs de probabilité d'accusé de réception.

4. Procédé selon la revendication 1, dans lequel la transmission du code de Huffman via les un ou plusieurs étages du message de commande de liaison montante comprend en outre :
une transmission de bits individuels du code de Huffman sur une base par étage, et éventuellement dans lequel :
les un ou plusieurs étages du message de commande de liaison montante sont un nombre fixe d'étages, et
le code de Huffman a un nombre de bits qui est égal ou inférieur au nombre fixe d'étages.

5. Procédé selon la revendication 1, dans lequel les différentes ressources de message de commande de liaison montante sont différentes ressources temporelles ou fréquentielles d'un canal physique de commande de liaison montante.

6. Procédé selon la revendication 1, dans lequel la transmission des bits individuels du code de Huffman dans les différentes ressources de message de commande de liaison montante comprend en outre :
une utilisation de différents niveaux de puissance de transmission pour une transmission sur les différentes ressources de message de commande de liaison montante de sorte que la transmission d'événements de priorité supérieure de la pluralité d'événements de retour accumulé soit associée à des niveaux de puissance de transmission supérieurs.

7. Procédé selon la revendication 1, comprenant en outre :
une réception d'un mappage de ressources de canal physique de commande de liaison montante à la pluralité d'événements de retour accumulé ;
une identification, à partir du mappage, d'une ressource de canal physique de commande de liaison montante sélectionnée qui correspond à l'événement représentatif ; et
une transmission d'un bit sur la ressource de canal physique de commande de liaison montante sélectionnée afin d'indiquer que l'événement représentatif s'est produit.

8. Procédé selon la revendication 7, dans lequel le mappage est différent pour différents UE, et/ou dans lequel les ressources de canal physique de commande de liaison montante sont différenciées par le temps, la fréquence, ou les deux.

9. Procédé selon la revendication 7, dans lequel la réception du mappage comprend en outre :
une réception du mappage via au moins une parmi une signalisation de commande de ressource radio, RRC, ou une signalisation d'élément de commande, CE, de commande d'accès au support, MAC.

10. Procédé de communication sans fil réalisé par une station de base, le procédé comprenant :
une transmission (1505), à un équipement utilisateur, UE, d'une indication d'une pluralité d'événements de retour accumulé qui sont chacun représentatifs de différentes combinaisons de retour pour un rapport, par l'UE, d'un retour accumulé pour un ensemble d'occasions de liaison descendante planifiées ;
une réception (1510), depuis l'UE, d'un message de commande de liaison montante indicatif d'un événement représentatif parmi la pluralité d'événements de retour accumulé, dans lequel la réception (1510) du message de commande de liaison montante comprend une réception (1610) d'un code de Huffman pour l'événement représentatif via un ou plusieurs étages du message de commande de liaison montante et dans lequel la réception du code de Huffman via les un ou plusieurs étages du message de commande de liaison montante comprend en outre une réception de bits individuels du code de Huffman dans différentes ressources de message de commande de liaison montante ; et
une détermination (1515), sur la base au moins en partie de l'événement représentatif, du retour accumulé de l'UE pour l'ensemble d'occasions de liaison descendante planifiées.

11. Procédé selon la revendication 10, dans lequel la réception des bits individuels du code de Huffman dans les différentes ressources de message de commande de liaison montante comprend en outre :
une réception des bits individuels du code de Huffman via différents niveaux de puissance de transmission sur les différentes ressources de message de commande de liaison montante de sorte que les événements de priorité supérieure de la pluralité d'événements de retour accumulé soient reçus avec des niveaux de puissance de transmission supérieurs.

12. Procédé selon la revendication 10, comprenant en outre :
une transmission, à l'UE, d'un premier mappage de ressources de canal physique de commande de liaison montante à la pluralité d'événements de retour accumulé.

13. Procédé selon la revendication 12, comprenant en outre :
une transmission, à un second UE, d'un second mappage de ressources de canal physique de commande de liaison montante à des événements de retour accumulé, le second mappage étant différent du premier mappage.

14. Appareil (705) de communication sans fil au niveau d'un équipement utilisateur, UE, comprenant :
un processeur (740) ;
une mémoire (730) couplée au processeur (740) ; et
des instructions stockées dans la mémoire (730) et exécutables par le processeur (740) pour amener l'appareil à exécuter les étapes du procédé selon l'une quelconque des revendications 1 à 9.

15. Appareil (1105) de communication sans fil au niveau d'une station de base, comprenant :
un processeur (1140) ;
une mémoire (1130) couplée au processeur (1140) ; et
des instructions stockées dans la mémoire (1130) et exécutables par le processeur (1140) pour amener l'appareil à exécuter les étapes du procédé selon l'une quelconque des revendications 10 à 13.
